# EUROPEAN PATENT APPLICATION

(11) **EP 4 546 245 A1**
(43) Date of publication of application: **30.04.2025**
(21) Application number: 23827059.9
(22) Date of filing: 13.06.2023
(51) Int. Cl.: G06Q 50/02, B60R 25/23, G06Q 10/06

(54) **WORK ASSIST SYSTEM**

(30) Priority: 21.06.2022 JP 2022099620
(71) Applicant: KUBOTA CORPORATION, Osaka-shi, Osaka 556-8601 (JP)
(72) Inventor: ISHIZAKI Takashi, Sakai-shi, Osaka 590-0908 (JP)
(74) Representative: Cabinet Beau de Loménie
(86) International application number: PCT/JP2023/021922
(87) International publication number: WO 2023/248873

(57) **Abstract**

A work assist system capable of improving convenience of operation of a working machine (1) is provided.

The work assist system is a work assist system that assists in an operation for setting the working machine (1) and includes an authenticator (44) to authenticate a user who operates the working machine (1), a memory (47a) to store in advance associated data in which information regarding a user, a language of the user, and setting information regarding the working machine (1) set by the user are associated with one another, and a setter (55) to acquire, from the memory (47a), the language of the user and the setting information regarding the working machine (1) corresponding to information regarding the user authenticated by the authenticator (44) and set the language and the setting information.

## Description

### Technical Field

The present invention relates to, for example, a work assist system that assists in an operation for setting a working machine.

### Background Art

PTL 1 describes a management system including tractors to which a working device can be attached and a management server. The management server includes an information table in which model number information regarding the tractors, owners of the tractors, and work setting information are associated with one another and stored. In this management system, the management server identifies an owner of a tractor on the basis of model number information regarding the tractor, selects work setting information corresponding to the identified owner from the information table, and transmits the work setting information directly to the working device. The working device receives and sets the work setting information transmitted from the management server.

### Citation List

### Patent Literature

PTL 1: Japanese Unexamined Patent Application Publication No. 2020-154783

### Summary of Invention

### Technical Problem

Since it is assumed in PTL 1 that an owner of a tractor operates the tractor, a case where a user other than an owner operates a tractor is not taken into consideration. That is, work setting information corresponding to a user other than an owner cannot be set in the working device. There is therefore a problem that operation of the working machine is not sufficiently convenient.

In view of the above problem, therefore, the present invention aims to provide a work assist system capable of improving convenience of operation of a working machine.

### Solution to Problem

Technical means of the present invention for solving this technical problem are characterized in the following respects.

A work assist system according to an aspect of the present invention is a work assist system that assists in an operation for setting a working machine. The work assist system includes an authenticator to authenticate a user who operates the working machine, a memory to store in advance associated data in which information regarding a user, a language of the user, and setting information regarding the working machine set by the user are associated with one another, and a setter to acquire, from the memory, the language of the user and the setting information regarding the working machine corresponding to information regarding the user authenticated by the authenticator and set the language and the setting information.

The work assist system may further include the working machine and a server. The working machine may include the authenticator, a first communicator that transmits the information regarding the user authenticated by the authenticator to the server, and the setter. The server may include the memory, a second communicator, and a controller configured or programmed to identify, on a basis of the associated data, the language of the user and the setting information regarding the working machine corresponding to the information regarding the user received from the first communicator and cause the second communicator to transmit the language and the setting information. The setter of the working machine may set the language of the user and the setting information regarding the working machine received by the first communicator.

The work assist system may further include a mobile terminal including a requester to request the setting information regarding the working machine, an acquirer to acquire the information regarding the user and the language of the user, and a third communicator to transmit, as the associated data, data in which the setting information regarding the working machine acquired as a result of the request given by the requester and the information regarding the user and the language of the user acquired by the acquirer are associated with one another.

The mobile terminal may include a display. The requester may cause the third communicator to transmit a first request signal for requesting the setting information regarding the working machine to the working machine. When the third communicator receives the setting information regarding the working machine, the display may display the received setting information regarding the working machine.

The acquirer may acquire the information regarding the user and the language of the user input to the mobile terminal or the information regarding the user or the language of the user stored in the mobile terminal in advance. The display may display the associated data in which the setting information regarding the working machine received by the third communicator and the information regarding the user and the language of the user acquired by the acquirer are associated with one another.

The working machine may include a biological information acquirer that acquires biological information regarding the user when the user rides in the working machine. The authenticator may authenticate the user on a basis of the biological information acquired by the biological information acquirer.

The biological information acquirer may include an imager that captures an image of a face of the user who operates the working machine, a voice inputter to which a voice of the user who operates the working machine is input, or a fingerprint acquirer that acquires a fingerprint of the user who operates the working machine.

The working machine may include an information inputter to which information for theft prevention is input and a user determiner that determines whether the information input to the information inputter matches predetermined registration information for theft prevention and, if the information matches the registration information, determines that the user is an authorized user and, if the information does not match the registration information, the user is not an authorized user. If the user determiner determines that the user is an authorized user, the first communicator may transmit the information regarding the user authenticated by the authenticator to the server, and if the user determiner determines that the user is not an authorized user, the first communicator need not transmit the information regarding the user authenticated by the authenticator to the server.

The working machine may include a vehicle body including a traveling device and a coupler that is provided for the vehicle body and to which a working device is coupled. Even if a user other than the user authenticated by the authenticator rides in the working machine and the authenticator authenticates the other user while the working device is working, the first communicator need not transmit information regarding the other user authenticated by the authenticator to the server.

While the working device is working, the working device may be located at a working position and working on a ground and/or the vehicle body may be being subjected to automatic steering along a scheduled travel line.

The memory may store, as the associated data, agricultural field management data in which an agricultural field indicated by an agricultural field map, a manager of the agricultural field, a language of the manager, and setting information regarding the working machine set by the manager are associated with one another. The working machine may include a vehicle body including a traveling device and a positioning device that acquires measured position information indicating a position of the vehicle body and the first communicator may transmit the measured position information to the server along with the information regarding the user. The controller may be configured or programmed to identify an agricultural field corresponding to the measured position information received by the second communicator on a basis of the associated data, identify a manager of the identified agricultural field, if the identified manager and the user indicated by the information regarding the user received by the second communicator match, cause the second communicator to transmit a language of the identified manager and the setting information regarding the working machine set by the identified manager to the working machine, and, if the identified manager and the user indicated by the information regarding the user received by the second communicator do not match, not cause the second communicator to transmit a language of the user indicated by the received information regarding the user and the setting information regarding the working machine set by the user to the working machine.

The first communicator may transmit the measured position information to the server each time a predetermined period of time passes. When a position of the vehicle body indicated by the measured position information changes from a position in a first agricultural field indicated by the agricultural field map or a position outside an agricultural field to a position in a second agricultural field, the controller may be configured or programed to cause the second communicator to transmit a second request signal for requesting the information regarding the user who operates the working machine, determine whether the information regarding the user transmitted from the working machine in response to the second request signal corresponds to the manager of the second agricultural field, if the information does not correspond to the manager, cause the second communicator to transmit a warning signal, and if the information corresponds to the manager, cause the second communicator to transmit a language of the manager associated with the second agricultural field and setting information regarding the working machine set by the manager.

### Advantageous Effects of Invention

According to the present invention, convenience of operation of a working machine can be improved.

### Brief Description of Drawings

[FIG. 1] FIG. 1 is a diagram illustrating a work assist system according to a first embodiment.
[FIG. 2] FIG. 2 is a configuration diagram of a transmission.
[FIG. 3A] FIG. 3A is a perspective view of a raising/lowering device.
[FIG. 3B] FIG. 3B is a diagram illustrating an example of a scheduled travel line on an agricultural field.
[FIG. 4] FIG. 4 is a diagram illustrating an example of a work settings screen.
[FIG. 5] FIG. 5 is a diagram illustrating setting information for each of users stored in a memory of a working machine.
[FIG. 6A] FIG. 6A is a diagram illustrating an example of registration information registered in a server according to the first embodiment.
[FIG. 6B] FIG. 6B is a diagram illustrating an example of registration information registered in a server according to a second embodiment.
[FIG. 7A] FIG. 7A is a diagram illustrating a procedure of a process performed by the work assist system according to the first embodiment.
[FIG. 7B] FIG. 7B is a diagram illustrating an example of a display screen of a mobile terminal.
[FIG. 8] FIG. 8 is a flowchart illustrating a process performed by the working machine in the work assist system according to the first embodiment.
[FIG. 9] FIG. 9 is a flowchart illustrating a process performed by the server in the work assist system according to the first embodiment.
[FIG. 10] FIG. 10 is a diagram illustrating a work assist system according to a variation.
[FIG. 11] FIG. 11 is a flowchart illustrating a process performed by a working machine in the work assist system according to the variation.
[FIG. 12] FIG. 12 is a flowchart illustrating a process performed by a working machine in a work assist system according to the second embodiment.
[FIG. 13] FIG. 13 is a flowchart illustrating a process performed by the server in the work assist system according to the second embodiment.
[FIG. 14] FIG. 14 is a flowchart illustrating a process performed by a server in a work assist system according to a third embodiment.
[FIG. 15] FIG. 15 is a side view of a working machine (tractor).

### Description of Embodiments

An embodiment of the present invention will be described hereinafter with reference to the drawings.

### [First Embodiment]

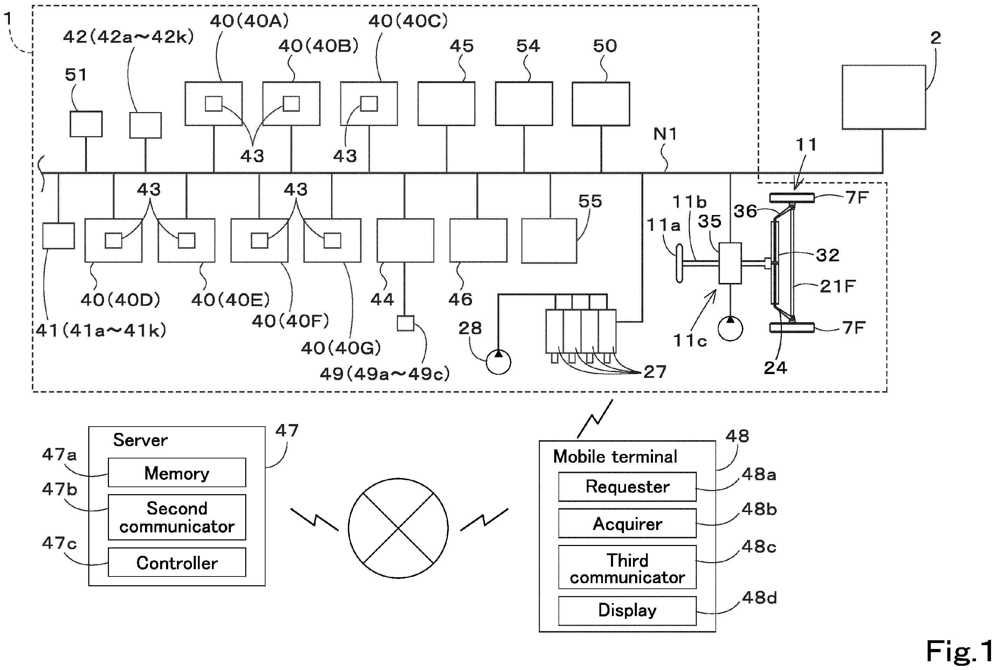

FIG. 1 is a diagram illustrating a work assist system according to a first embodiment. The working assist system according to the first embodiment includes a working machine 1, a server 47, and a mobile terminal 48, and assists in an operation for setting the working machine 1. The working machine 1 is an agricultural machine such as a tractor, a combine, or a rice transplanter, a construction machine such as a loader or a backhoe, or the like.

The working machine 1 will be described hereinafter while taking a tractor as an example. Note that since the working machine 1 is not limited to a tractor as described above, components common to an agricultural machine such as a combine or a rice transplanter or a construction machine such as a loader or a backhoe can be diverted. That is, description of the tractor may be read as for another agricultural machine or a construction machine.

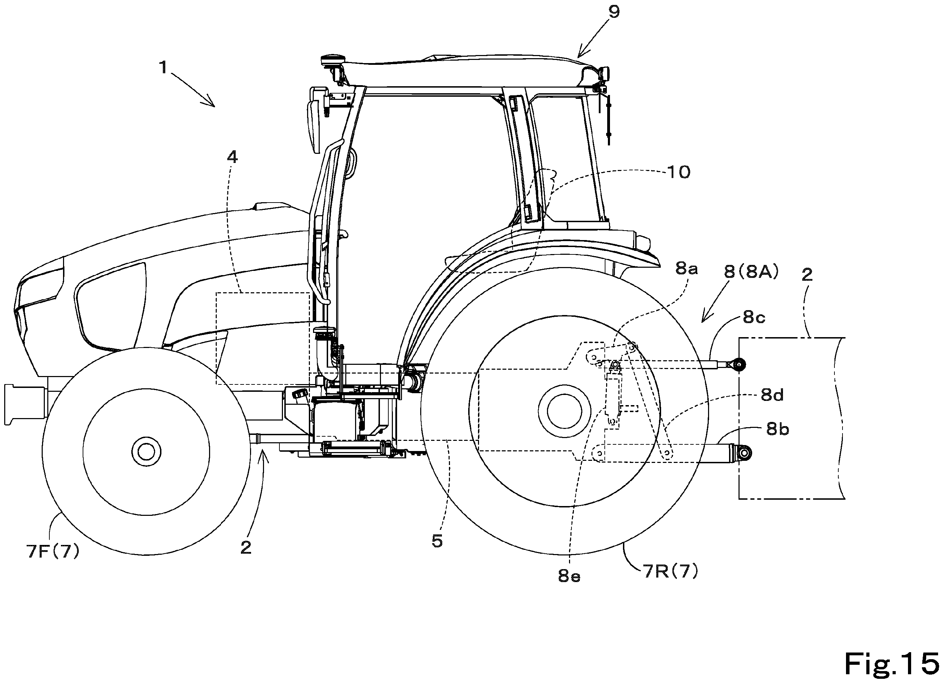

FIG. 15 is a side view of the working machine 1 (tractor). As illustrated in FIG. 15, the working machine 1 (tractor) includes a machine body 3 including a traveling device 7, a prime mover 4, and a transmission 5. The traveling device 7 is a device including front wheels 7F and rear wheels 7R. The front wheels 7F may be of a tire type or a crawler type. The rear wheels 7R, too, may be of a tire type or a crawler type. The prime mover 4 is an internal combustion engine such as a gasoline engine or a diesel engine, an electric motor, or the like. In this embodiment, the prime mover 4 is a diesel engine.

The transmission 5 is capable of switching propelling force of the traveling device 7 by changing speed stages and switching the traveling device 7 between forward movement and backward movement. A cabin 9 is provided for the machine body 3. An operator's seat 10 is provided in the cabin 9.

A coupler 8A is provided at a rear portion of the machine body 3. A working device 2 is attachable to the coupler 8A. In this embodiment, the coupler 8A is a raising/lowering device 8 that raises and lowers the attached working device 2. The working device 2 is a tiller for tilling, a fertilizer spreader for spreading fertilizer, a pesticide spreader for spreading pesticides, a harvester for harvesting, a mower for harvesting grass or the like, a spreader for spreading grass or the like, a grass collector for collecting grass or the like, a former for forming grass or the like, or the like.

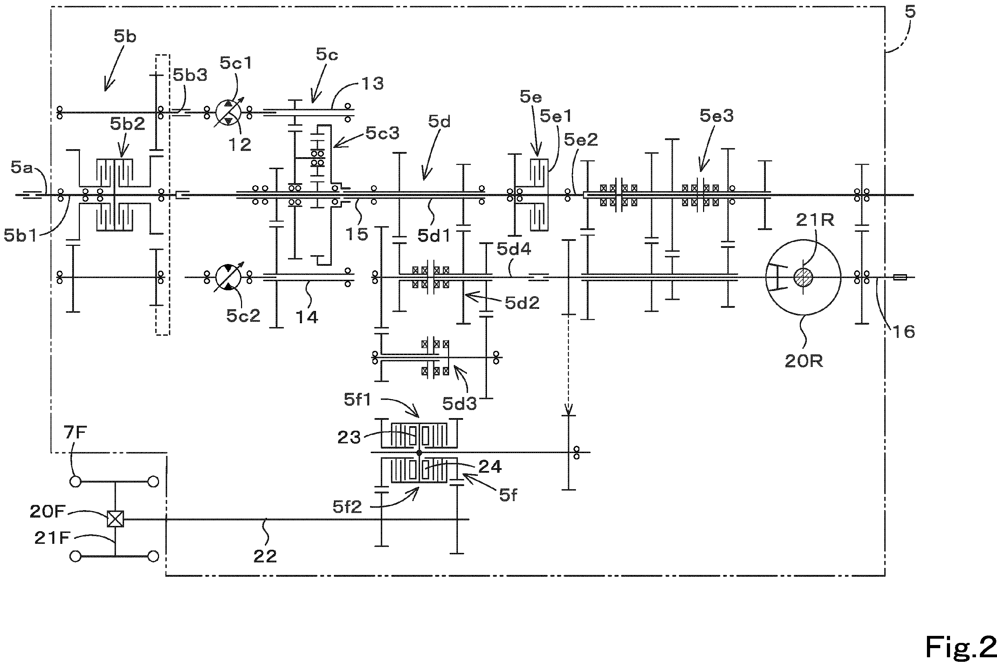

FIG. 2 is a configuration diagram of the transmission 5. As illustrated in FIG. 2, the transmission 5 includes a main shaft (drive shaft) 5a, a shuttle 5b, a main transmission 5c, a sub-transmission 5d, a PTO (power take-off) power transmission 5e, and a front transmission 5f. The drive shaft 5a is rotatably supported in a housing case of the transmission 5, and power from a crankshaft of the prime mover 4 is transmitted to the drive shaft 5a.

The shuttle 5b includes a shuttle shaft 5b1 and a forward/backward movement switch 5b2. Power from the drive shaft 5a is transmitted to the shuttle shaft 5b1. The forward/backward movement switch 5b2 includes a hydraulic clutch or the like, for example, and switches a direction of rotation of the shuttle shaft 5b1, that is, switches the working machine 1 between forward movement and backward movement, by engaging and disengaging the hydraulic clutch.

The main transmission 5c is a continuously variable transmission that continuously changes input power. The continuously variable transmission includes a hydraulic pump 5c1, a hydraulic motor 5c2, and a planetary gear mechanism 5c3. The hydraulic pump 5c1 is rotated by power from an output shaft 5b3 of the shuttle 5b. The hydraulic pump 5c1 is a variable displacement pump including a swash plate 12, for example, and capable of changing a flow rate of hydraulic fluid delivered from the hydraulic pump 5c1 by changing an angle of the swash plate 12 (swash plate angle). The hydraulic motor 5c2 is a motor rotated by hydraulic fluid delivered from the hydraulic pump 5c1 through a fluid passage circuit such as piping. Speed of the hydraulic motor 5c2 can be changed by changing the swash plate angle of the hydraulic pump 5c1 or changing power input to the hydraulic pump 5c1.

The planetary gear mechanism 5c3 is a mechanism including a plurality of gears (cogwheels) and power transmission shafts such as input shafts and an output shaft, and includes an input shaft 13 to which power from the hydraulic pump 5c1 is input, an input shaft 14 to which power from the hydraulic motor 5c2 is input, and an output shaft 15 that outputs power. The planetary gear mechanism 5c3 combines the power from the hydraulic pump 5c1 and the power from the hydraulic motor 5c2 and transmits resultant power to the output shaft 15.

With the main transmission 5c, therefore, power output to the sub-transmission 5d can be changed by changing, for example, the swash plate angle of the swash plate 12 of the hydraulic pump 5c1 and speed of the prime mover 4. Note that although the main transmission 5c is a continuously variable transmission, the main transmission 5c may be a stepped transmission that change speed stages using gears.

The sub-transmission 5d is a stepped transmission including a plurality of gears (cogwheels) for changing power, and changes and outputs power input to the sub-transmission 5d from the output shaft 15 of the planetary gear mechanism 5c3 (changes speed stages). The sub-transmission 5d includes an input shaft 5d1, a first transmission clutch 5d2, a second transmission clutch 5d3, and an output shaft 5d4. The input shaft 5d1 is a shaft to which power of the output shaft 15 of the planetary gear mechanism 5c3 is input, and inputs the input power to the first transmission clutch 5d2 and the second transmission clutch 5d3 through gears or the like. The input power is changed by engaging or disengaging the first transmission clutch 5d2 and the second transmission clutch 5d3 and output to the output shaft 5d4. The power output to the output shaft 5d4 is transmitted to a rear wheel differential 20R. The rear wheel differential 20R rotatably supports a rear axle 21R to which the rear wheels 7R are attached.

The PTO power transmission 5e includes a PTO clutch 5e1, a PTO drive shaft 5e2, and a PTO transmission 5e3. The PTO clutch 5e1 is a hydraulic clutch or the like, for example, and switches, as a result of engagement and disengagement of the hydraulic clutch, between a state (connected state) in which power of the drive shaft 5a is transmitted to the PTO drive shaft 5e2 and a state (disconnected state) in which power of the drive shaft 5a is not transmitted to the PTO drive shaft 5e2. The PTO transmission 5e3 includes a transmission clutch, a plurality of gears, and the like, and changes and outputs power (rotation speed) input to the PTO transmission 5e3 from the PTO drive shaft 5e2. Power of the PTO transmission 5e3 is transmitted to a PTO shaft 16 through gears or the like.

The front transmission 5f includes a first front transmission clutch 5f1 and a second front transmission clutch 5f2. The first front transmission clutch 5f1 and the second front transmission clutch 5f2 are capable of transmitting power from the sub-transmission 5d and, for example, transmit power of the output shaft 5d4 through gears and transmission shafts. Power from the first front transmission clutch 5f1 and the second front transmission clutch 5f2 can be transmitted to a front axle 21F through a front transmission shaft 22. More specifically, the front transmission shaft 22 is connected to a front wheel differential 20F, and the front wheel differential 20F rotatably supports the front axle 21F to which the front wheels 7F are attached.

The first front transmission clutch 5f1 and the second front transmission clutch 5f2 are hydraulic clutches or the like. A fluid passage is connected to the first front transmission clutch 5f1, and a control valve 23 to which hydraulic fluid delivered from a hydraulic pump is supplied is connected to the fluid passage. The first front transmission clutch 5f1 switches between a connected state and a disconnected state depending on opening of the control valve 23. A fluid passage is connected to the second front transmission clutch 5f2, and a control valve 24 is connected to the fluid passage. The second front transmission clutch 5f2 switches between a connected state and a disconnected state depending on opening of the control valve 24. Each of the control valve 23 and the control valve 24 is a two-position switching valve with a solenoid valve, and switches between a connected state and a disconnected state by energizing and deenergizing a solenoid of the solenoid valve.

When the first front transmission clutch 5f1 is in the disconnected state and the second front transmission clutch 5f2 is in the connected state, power of the sub-transmission 5d is transmitted to the front wheels 7F through the second front transmission clutch 5f2. As a result, four-wheel drive (4WD), in which the front wheels and the rear wheels are driven by power, is achieved, and rotation speeds of the front wheels and the rear wheels become substantially the same (4WD uniform velocity state). When the first front transmission clutch 5f1 is in the connected state and the second front transmission clutch 5f2 is in the disconnected state, on the other hand, four-wheel drive is achieved, and the rotation speed of the front wheels becomes higher than that of the rear wheels (4WD double speed state). When the first front transmission clutch 5f1 and the second front transmission clutch 5f2 are in the connected state, power of the sub-transmission 5d is not transmitted to the front wheels 7F, and two-wheel drive (2WD), in which the rear wheels are driven by power, is achieved.

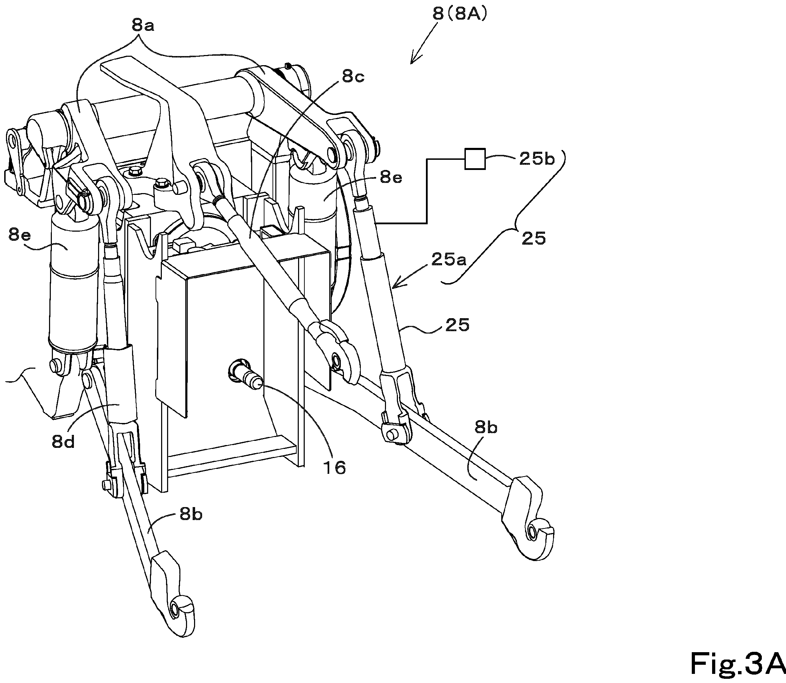

FIG. 3A is a perspective view of the raising/lowering device 8. As illustrated in FIG. 3A, the raising/lowering device 8 (coupler 8A) includes lift arms 8a, lower links 8b, a top link 8c, lift rods 8d, and lift cylinders 8e. Front ends of the lift arms 8a are supported above a rear portion of a case (transmission case) storing the transmission 5 in such a way as to be pivotable upward or downward. The lift arms 8a are driven by the lift cylinders 8e and pivot (rise and lower). The lift cylinders 8e are hydraulic cylinders. The lift cylinders 8e are connected to a hydraulic pump through a control valve 34. The control valve 34 is a solenoid valve or the like and extends and retracts the lift cylinders 8e.

Front ends of the lower links 8b are supported below a rear portion of the transmission 5 in such a way as to be pivotable upward or downward. A front end of the top link 8c is supported at the rear portion of the transmission 5 above the lower links 8b in such a way as to be pivotable upward or downward. The lift rods 8d couple the lift arms 8a and the lower links 8b to each other. The working device 2 is coupled to rear portions of the lower links 8b and a rear portion of the top link 8c. When the lift cylinders 8e are driven (extended and retracted), the lift arms 8a rise and lower, and the lower links 8b coupled to the lift arms 8a through the lift rods 8d rise and lower. As a result, the working device 2 pivots upward or downward (rises and lowers) with front portions of the lower links 8b as fulcrums.

Attitude changers 25 are provided for the raising/lowering device 8. The attitude changers 25 are devices that change an attitude of the working device 2 attached to the machine body 3. The attitude changers 25 each include a change cylinder 25a that is a hydraulic cylinder and a control valve 25b. The change cylinder 25a is connected to a hydraulic pump through the control valve 25b. The control valve 25b is a solenoid valve or the like, and extends and retracts the change cylinder 25a. The change cylinder 25a couples the corresponding lift arm 8a and the corresponding lower link 8b to each other.

As illustrated in FIG. 1, the working machine 1 includes a plurality of hydraulic control valves 27. The plurality of hydraulic control valves 27 are hydraulic switching valves to which hydraulic fluid is supplied from a hydraulic pump 28. The plurality of hydraulic control valves 27 includes output ports, and a hydraulic hose or the like can be connected to any of the output ports. By connecting the hydraulic hose connected to the output port of any of the hydraulic control valves 27 to one of various hydraulic attachments of the working device 2, the hydraulic attachment attached to the working device 2 can be operated.

A steering device 11 includes a steering wheel 11a, a rotation shaft (steering shaft) 11b that rotates as the steering wheel 11a rotates, and an assist mechanism (power steering mechanism) 11c that assists in steering of the steering wheel 11a. The assist mechanism 11C includes a control valve 35 and a steering cylinder 32. The control valve 35 is, for example, a three-position switching valve capable of switching as a spool or the like moves. The control valve 35 can also switch as a result of steering of the steering shaft 11b. The steering cylinder 32 is connected to arms (knuckle arms) 36 that change a direction of the front wheels 7F. By operating the steering wheel 11a, therefore, a switch position and opening of the control valve 35 change in accordance with the steering wheel 11a, and the steering cylinder 32 extends or retracts to the left or the right in accordance with the switch position and the opening of the control valve 35, thereby changing the steering direction of the front wheels 7F. The above-described steering device 11 is an example, and the steering device 11 is not limited to the above-described configuration.

As illustrated in FIG. 1, the working machine 1 includes a plurality of detectors 41. The plurality of detectors 41 is devices that detect states of the working machine 1, and includes, for example, a water temperature sensor 41a that detects water temperature, a fuel sensor 41b that detects remaining amount of fuel, a prime mover rotation sensor (rotation sensor) 41C that detects the rotation speed of the prime mover 4, an accelerator pedal sensor 41d that detects the amount of operation of an accelerator pedal, a steering angle sensor 41e that detects a steering angle of the steering device 11, an angle sensor 41f that detects an angle of the lift arms 8a, an inclination detection sensor 41g that detects inclination of the machine body 3 in a width direction (rightward or leftward), a velocity sensor 41h that detects vehicle speed (velocity) of the machine body 3, a PTO rotation sensor (rotation sensor) 41i that detects rotation speed of the PTO shaft, a battery sensor 41j that detects a voltage of a storage battery such as a battery, and a positioning sensor (positioning device) 41k that detects a position of the machine body 3 on the basis of signals from positioning satellites or the like, and the like.

The positioning device 41k is capable of detecting a position thereof (measured position information including latitude and longitude) using a satellite positioning system (positioning satellites) such as D-GPS, GPS, GLONASS, BeiDou, Galileo, or Michibiki. That is, the positioning device 41k receives satellite signals (positions of the positioning satellites, transmission times, correction information, etc.) transmitted from the positioning satellites and detects the position (e.g., latitude and longitude) of the working machine 1, that is, a vehicle body position, on the basis of the satellite signals. The positioning device 41k includes a receiver and an inertial measurement unit (IMU). The receiver is a device that includes an antenna and the like and that receives satellite signals transmitted from the positioning satellites and is attached to the machine body 3 separately from the IMU. In this embodiment, the receiver is attached to the machine body 3. A position at which the receiver is attached is not limited to that in the embodiment.

The IMU includes an acceleration sensor that detects acceleration, a gyroscope sensor that detects angular velocity, and the like. The IMU is provided under the machine body 3, or more specifically the operator's seat 10, and capable of detecting a roll angle, a pitch angle, a yaw angle, and the like of the machine body 3.

Note that the velocity sensor 41h detects the vehicle speed by, for example, converting a rotation speed of the front axle 21F, a rotation speed of the rear axle 21R, a rotation speed of the front wheels 7F, a rotation speed of the rear wheels 7R, and the like into vehicle speed. The velocity sensor 41h is also capable of detecting a rotation direction of one of the front axle 21F, the rear axle 21R, the front wheels 7F, and the rear wheels 7R and detecting whether the working machine 1 (machine body 3) is moving forward or backward. The above-described detectors 41 are examples, and the detectors 41 are not limited to the above-described sensors.

The working machine 1 also includes a plurality of operation members (operation devices) 42. The plurality of operation members 42 includes a shuttle lever 42a that switches the machine body 3 between forward movement and backward movement, an ignition switch 42b that, for example, starts the prime mover 4, a PTO transmission lever 42c that sets the rotation speed of the PTO shaft, a transmission switch 42d that switches between automatic transmission and manual transmission, a transmission lever 42e that manually change speed stages (speed levels) of the transmission 5, an accelerator 42f that changes the vehicle speed, a raising/lowering switch 42g that raises and lowers the raising/lowering device 8, a height setting dial 42h that sets an upper limit of the raising/lowering device 8, a vehicle speed lever 42i that sets the vehicle speed, a hydraulic operation actuator 42j, a rotation setting tool 42k that sets an upper limit of the rotation speed of the prime mover, and the like.

Setting tools such as the transmission switch 42d, the height setting dial 42h, and the rotation setting tool 42k are provided for a console box provided beside the operator's seat 10. An operator can set an operation of the machine body 3 by operating the setting tools (the transmission switch 42d, the height setting dial 42h, and the rotation setting tool 42k). Note that the above-described operation members 42 are examples, and the operation members 42 are not limited to those described above.

As illustrated in FIG. 1, the working machine 1 includes a controller 50. The controller 50 is a device that controls the working machine 1. The controller 50 is a CPU, electrical and electronic circuits, or the like, and is achieved by control programs and the like stored in a memory 54.

The working machine 1 includes a plurality of machine body controllers 40. The machine body controllers 40 are devices that control the working machine 1 (machine body 3) in various manners, and are CPUs, electrical and electronic circuits, or the like. The machine body controllers 40 each include a memory 43 storing various pieces of information including, for example, control programs, identification information, and the like. The memory 43 is a nonvolatile memory or the like. That is, the plurality of machine body controllers 40 is electrical components each including a memory 43.

The plurality of machine body controllers 40 includes a transmission controller 40A, an engine controller 40B, a PTO controller 40C, a raising/lowering controller 40D, an automatic steering controller 40E, an attitude controller 40F, and an auxiliary hydraulic controller 40G. Note that the machine body controllers 40 need not include all of the transmission controller 40A, the engine controller 40B, the PTO controller 40C, the raising/lowering controller 40D, the automatic steering controller 40E, the attitude controller 40F, and the auxiliary hydraulic controller 40G, and may be provided in accordance with specifications of the working machine 1.

The transmission controller 40A, the engine controller 40B, the PTO controller 40C, the raising/lowering controller 40D, the automatic steering controller 40E, the attitude controller 40F, and the auxiliary hydraulic controller 40G may be provided in an integrated controller 50.

The transmission controller 40A performs transmission control. In the transmission control, when an automatic transmission function is enabled, the main transmission 5c or the sub-transmission 5d is switched in accordance with a state of the working machine 1, and the speed stages (speed levels) of the transmission 5 are automatically changed to a predetermined speed stage (speed level). When the transmission switch 42d is used to switch to the manual transmission in the transmission control, the main transmission 5c or the sub-transmission 5d is automatically switched in accordance with the speed stage (speed level) set using the transmission lever 42e to change speed stages of the transmission 5.

The transmission controller 40A performs control (traveling switching control) in a traveling drive state of the traveling device 7 (an operation of the traveling device 7). In the traveling switching control, when the shuttle lever 42a is operated to achieve forward movement, the machine body 3 is caused to move forward by switching the forward/backward movement switch 5b2 of the shuttle 5b to forward movement. When the shuttle lever 42a is operated to achieve backward movement in the traveling switching control, the machine body 3 is caused to move backward by switching the forward/backward movement switch 5b2 of the shuttle 5b to backward movement.

In the case of 4WD, the first front transmission clutch 5f1 is caused to enter the disconnected state and the second front transmission clutch 5f2 is caused to enter the connected state in the traveling switching control. In the case of 4WD double speed, the first front transmission clutch 5f1 is caused to enter the connected state and the second front transmission clutch 5f2 is caused to enter the disconnected state in the traveling switching control. In the case of 2WD, the first front transmission clutch 5f1 and the second front transmission clutch 5f2 are caused to enter the connected state in the traveling switching control.

The engine controller 40B performs engine control. In the engine control, when the ignition switch 42b is turned on, the prime mover 4 is started through a predetermined process, and when the ignition switch 42b is turned off, the prime mover 4 is stopped driving. In the engine control, when the accelerator 42f is operated, the vehicle speed (velocity) of the machine body 3 is changed by changing the rotation speed of the prime mover 4 (referred to as prime mover rotation speed) in accordance with the amount of operation of the accelerator 42f.

The PTO controller 40C performs PTO control. In the PTO control, when the PTO transmission lever 42c is operated, the rotation speed of the PTO shaft (referred to as PTO rotation speed) by switching PTO transmission gears built into the transmission 5.

The raising/lowering controller 40D performs raising/lowering control. In the raising/lowering control, when a manual raising/lowering function is enabled and the raising/lowering switch 42g is operated in a raising direction (raising side), the lift cylinders 8e are extended and rear ends of the lift arms 8a (ends on a working device 2 side) are raised by controlling the control valve 34. In the raising/lowering control, when the manual raising/lowering function is enabled and the raising/lowering switch 42g is operated in a lowering direction (lowering side), the lift cylinders 8e are retracted and the rear ends of the lift arms 8a (the ends on the working device 2 side) are lowered by controlling the control valve 34. If a position of the working device 2, that is, the angle of the lift arms 8a, reaches the upper limit (height upper limit value) set by the height setting dial 42h while the raising/lowering device 8 is raising the working device 2, the raising/lowering device 8 stops the raising.

In the raising/lowering control, when a back-up function is enabled and the machine body 3 has moved backward, the lift cylinders 8e are extended and the rear ends of the lift arms 8a (the ends on the working device 2 side) are raised by automatically controlling the control valve 34. In the raising/lowering control, when an auto-up function is enabled and the steering angle of the steering device 11 becomes larger than or equal to a predetermined angle, the lift cylinders 8e are extended and the rear ends of the lift arms 8a (the ends on the working device 2 side) are raised by automatically controlling the control valve 34.

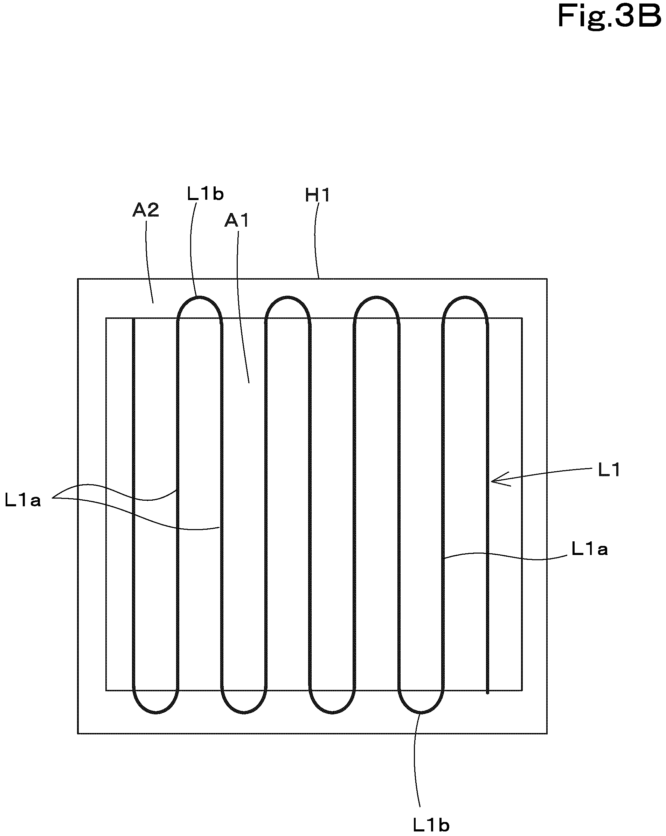

The automatic steering controller 40E performs automatic steering control. In the automatic steering control, when an auto-steer function (automatic steering function) is enabled, the steering angle of the steering device 11 is automatically controlled by controlling the control valve 35 such that the position (vehicle body position) detected by the positioning device 41k matches a predetermined scheduled travel line L1 (refer to FIG. 3B). FIG. 3B is a diagram illustrating an example of the scheduled travel line L1 on an agricultural field H1. A work area A1, in which the working device 2 works, is set in the agricultural field H1. The scheduled travel line L1 includes, for example, a plurality of parallel straight portions L1a set in the work area A1 and a plurality of turning portions L1b connecting ends of adjacent straight portions L1a to each other. The plurality of turning portions L1b is set in a headland area A2, which is an area in the agricultural field H1 outside the work area A1. The automatic steering controller 40E performs the automatic steering control in at least the straight portions L1a. The automatic steering controller 40E may also perform the automatic steering control in the turning portions L1b.

The attitude controller 40F performs attitude control. In the attitude control, in the case of a position function (fixing function), control signals are output to the control valves 25b to fix length of the change cylinders 25a to a predetermined length. That is, an angle of the working device 2 in the width direction (an angle of a straight line connecting the lower links 8a and 8b to each other relative to a horizontal line) set by the attitude changers 25. In the attitude control, in the case of a horizontal function, control signals are output to the control valves 25b to extend or retract the change cylinders 25a and keep the working device 2 set by the attitude changers 25 horizontal. In the attitude control, in the case of an inclination function, control signals are output to the control valves 25b to extend or retract the change cylinders 25a and keep the working device 2 set by the attitude changers 25 parallel to the agricultural field (ground).

The auxiliary hydraulic controller 40G controls, among the plurality of hydraulic control valves 27, an auxiliary valve (operation control valve) 27 to which a hydraulic hose or the like is connected. For example, the auxiliary hydraulic controller 40G performs control for switching a flow of hydraulic fluid output from a predetermined hydraulic control valve 27 when a hydraulic operation actuator 42j such as a pivotable lever is operated. When the hydraulic operation actuator 42j is operated to the left, for example, the auxiliary hydraulic controller 40G energizes a solenoid of the predetermined hydraulic control valve 27 to move a spool of the predetermined hydraulic control valve 27 and cause the hydraulic fluid to flow in one direction. When the hydraulic operation actuator 42j is operated to the right, the auxiliary hydraulic controller 40G energizes a solenoid of a predetermined hydraulic control valve 27 to move a spool of the predetermined hydraulic control valve 27 and cause the hydraulic fluid to flow in another direction. As a result, hydraulic attachments of the working device 2 can be operated using the hydraulic control valves 27.

The working machine 1 includes a first communicator 46. The first communicator 46 is a communicator (communication module) that performs direct communication or indirect communication with the server 47 or the mobile terminal 48, and is capable of performing wireless communication in accordance with, for example, Wi-Fi (Wireless Fidelity; registered trademark) in an IEEE 802.11 series, which is communication standards, BLE (Bluetooth (registered trademark) Low Energy), LPWA (Low Power, Wide Area), LPWAN (Low-Power Wide-Area Network), or the like. The first communicator 46 may be a communicator (communication module) that performs wireless communication over a mobile phone communication network or a data communication network.

The working machine 1 includes a display 45. The display 45 is a device that displays various pieces of information relating to the working machine 1. The display 45 is provided around the operator's seat 10, and the operator can check what is displayed on the display 45. The display 45 is a meter panel device that displays operation information, an auxiliary panel device (e.g., a touch panel) that makes settings for various working machines, or the like.

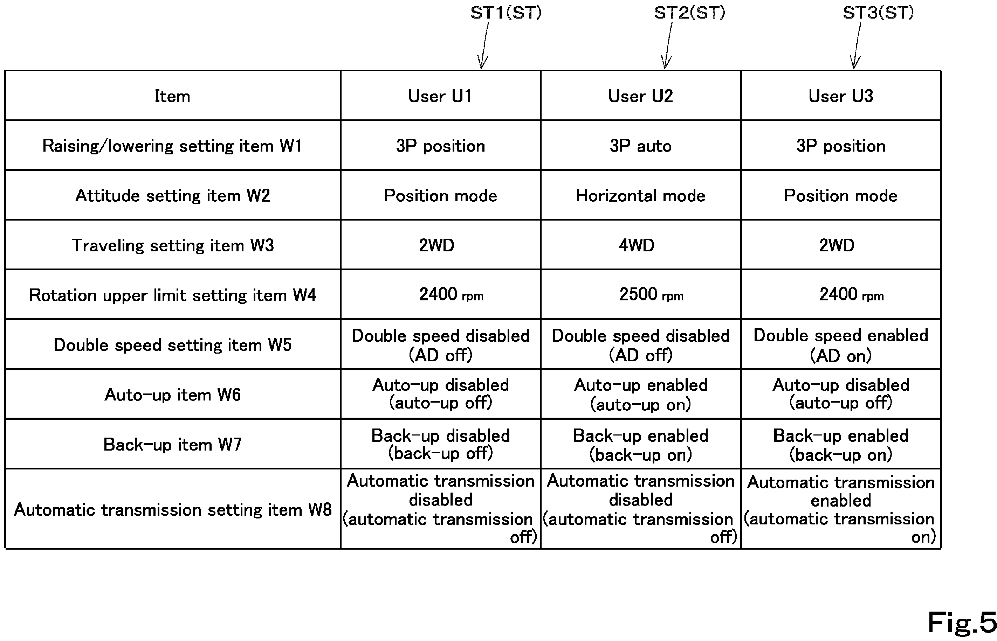

The working machine 1 includes the memory 54. The memory 54 is a nonvolatile memory such as an HDD (hard disk drive) or an SSD (solid-state drive). The memory 54 is a device that stores various pieces of information relating to the working machine 1. For example, the memory 54 stores setting information ST regarding the working machine 1 assigned to each of predetermined users. As illustrated in FIG. 5, which will be referred to later, the memory 54 stores setting information ST1 regarding the working machine 1 for a user U1, setting information ST2 regarding the working machine 1 for a user U2, and setting information ST3 regarding the working machine 1 for a user U3.

The working machine 1 (machine body 3) includes a vehicle network N1. The vehicle network N1 is a network such as a CAN (controller area network), a LIN (local interconnect network), a MOST (media oriented system transport), FlexRay, or ISO 11783 (ISOBUS). The vehicle network N1 is constructed by various electrical components and the like, and the plurality of machine body controllers 40, the plurality of detectors 41, the display 45, the first communicator 46, the memory 54, and the like are connected to the vehicle network N1.

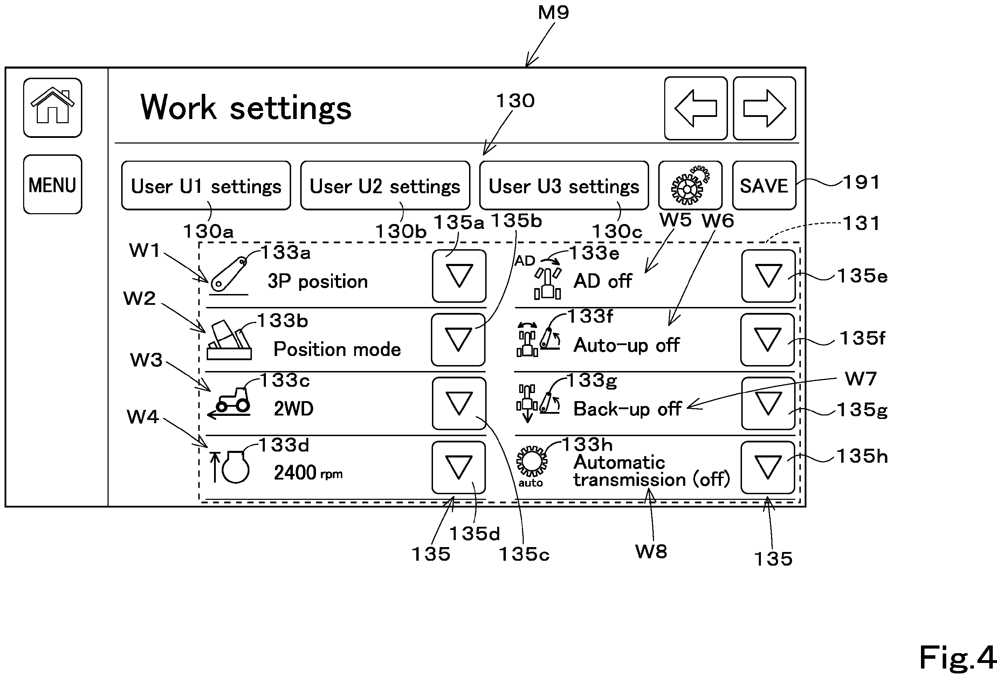

FIG. 4 is a diagram illustrating an example of a work settings screen M9.

As illustrated in FIG. 4, when the operator or another person performs a predetermined touch operation, for example, the display 45 displays the work settings screen M9. The work settings screen M9 is a screen in which the setting information ST regarding the working machine 1 assigned to each of the predetermined users can be displayed. In FIG. 4, the setting information ST1 regarding the working machine 1 for the user U1 has been selected on the work settings screen M9, and a plurality of setting items W1 to W8 and various contents are displayed for the setting information ST1.

First, the setting information ST regarding the working machine 1 for each user in the work settings screen M9 will be described. The setting information ST regarding the working machine 1 for each user shown in the work settings screen M9 includes the plurality of setting items. The plurality of setting items includes, for example, a "raising/lowering setting item W1", which is an item necessary for the working device 2 to work and indicates an operation setting of the raising/lowering device 8 in forward movement, an "attitude setting item W2", which indicates an operation setting of the attitude changers 25, a "traveling setting item W3", which indicates an operation setting of traveling of the machine body 3, a "rotation upper limit setting item W4", which indicates an upper limit value of the prime mover rotation speed, a "double speed setting item W5", which indicates whether the rotation speed of the front wheels 7F has increased during turning or the like, an "auto-up item W6", which indicates an operation setting of a second automatic raising operation, a "back-up item W7", which indicates an operation setting of a first automatic raising operation, and an "automatic transmission setting item W8", which indicates an operation setting of the automatic transmission of the transmission 5. The setting items displayed in the work settings screen M9 may be items relating to work of the working machine 1, such as items with which the working device 2 works and items relating to traveling of the machine body 3, and are not limited to the above-described items. In the work settings screen M9, it is sufficient that at least one of the raising/lowering setting item W1, the attitude setting item W2, the traveling setting item W3, the rotation upper limit setting item W4, the double speed setting item W5, the auto-up item W6, the back-up item W7, and the automatic transmission setting item W8 be displayed, and not all the setting items need to be displayed.

Item setting information corresponding to the raising/lowering setting item W1 is, for example, a manual raising/lowering mode (3P position) or an automatic raising 3P mode (3P auto). Item setting information corresponding to the attitude setting item W2 is a position mode, a horizontal mode, or an inclination mode. Item setting information corresponding to the traveling setting item W3 is 4WD, 4WD increased speed, or 2WD. Item setting information corresponding to the rotation upper limit setting item W4 is an upper limit value of the prime mover rotation speed. Item setting information corresponding to the double speed setting item W5 is enabling (on) or disabling (off) of double speed. Item setting information corresponding to the auto-up item W6 is enabling (on) or disabling (off) of the second automatic raising operation. Item setting information corresponding to the back-up item W7 is enabling (on) or disabling (off) of the first automatic raising operation. Item setting information corresponding to the automatic transmission setting item W8 is enabling (on) or disabling (off) of the automatic transmission.

FIG. 5 is a diagram illustrating the setting information ST1 to ST3 regarding the working machine 1 for the users stored in the memory 54 of the working machine 1. As illustrated in FIG. 5, the memory 54 stores, for the users U1 to U3, the setting information ST1 to ST3 regarding the working machine 1 in which the plurality of setting items (the raising/lowering setting item W1, the attitude setting item W2, the traveling setting item W3, the rotation upper limit setting item W4, the double speed setting item W5, the auto-up item W6, the back-up item W7, and the automatic transmission setting item W8) and the contents of the setting items (3P position, 3P auto, the position mode, the horizontal mode, the inclination mode, 4WD, 4WD increased speed, 2WD, the upper limit value of the prime mover rotation speed, enabling and disabling of double speed, enabling and disabling of the second automatic raising operation (auto-up), enabling and disabling of the first automatic raising operation (back-up), and enabling and disabling of the automatic transmission) are associated with each other.

The display 45 displays a user display portion 130 and a list display portion 131 in the work settings screen M9. The user display portion 130 is a portion in which a plurality of predetermined users is displayed. The user display portion 130 includes a plurality of name display portions 130a, 130b, and 130c. In each of the plurality of name display portions 130a, 130b, and 130c, a user name is shown. In this embodiment, the name display portion 130a indicates the setting information ST1 regarding the working machine 1 for the user U1, the name display portion 130b indicates the setting information ST2 regarding the working machine 1 for the user U2, and the name display portion 130c indicates the setting information ST3 regarding the working machine 1 for the user U3. Each of the name display portions 130a, 130b, and 130c can be selected through a touch operation.

The list display portion 131 shows setting information ST regarding the working machine 1 for a selected one of the plurality of users shown in the user display portion 130. When the name display portion 130a is selected, for example, the list display portion 131 reads the setting information ST1 regarding the working machine 1 for the user U1 from the memory 54, sequentially shows, in the work settings screen M9, icons 133 indicating the plurality of setting items corresponding to the read setting information ST1 regarding the working machine 1 for the user U1, and sequentially shows, in the work settings screen M9 next to the corresponding icons 133, contents (item setting information) of the setting items read from the memory 54. That is, the list display portion 131 shows an icon 133a indicating the raising/lowering setting item W1, an icon 133b indicating the attitude setting item W2, an icon 133c indicating the traveling setting item W3, an icon 133d indicating the rotation upper limit setting item W4, an icon 133e indicating the double speed setting item W5, an icon 133f indicating the auto-up item W6, an icon 133g indicating the back-up item W7, and an icon 133h indicating the automatic transmission setting item W8. Contents of setting items corresponding to the icons 133a to 133h are also shown.

When the operator or another person selects one of the plurality of name display portions 130a, 130b, and 130c, therefore, the display 45 displays the setting information ST regarding the working machine 1 for the selected user in the work settings screen M9. The operator or another person can check the contents of the setting information ST regarding the working machine 1 for the user displayed on the display 45.

The list display portion 131 includes change display portions 135. The change display portions 135 are button images for changing the item setting information. The change display portions 135 can be used to change the item setting information for the individual setting items, and include a change portion 135a corresponding to the raising/lowering setting item W1, a change portion 135b corresponding to the attitude setting item W2, a change portion 135c corresponding to the traveling setting item W3, a change portion 135d corresponding to the rotation upper limit setting item W4, a change portion 135e corresponding to the double speed setting item W5, a change portion 135f corresponding to the auto-up item W6, a change portion 135g corresponding to the back-up item W7, and a change portion 135h corresponding to the automatic transmission setting item W8. Each of the change portions 135a to 135h can be selected by performing a touch operation, and as a result of the selection, the item setting information displayed in the list display portion 131 can be changed. When the change portion 135d is selected, for example, the upper limit value of the prime mover rotation speed can be changed. When the change portion 135h is selected, on and off of the automatic transmission can be changed. The setting information ST regarding the working machine 1 for each user, that is, the item setting information displayed in the work settings screen M9, therefore, can be changed.

The display 45 includes a setting instruction portion 191. The setting instruction portion 191 is used to instruct the memories 43 of the plurality of machine body controllers 40 to store (set) the current setting information ST displayed in the work settings screen M9. More specifically, when the setting instruction portion (switch) 191 is touched, the display 45 instructs each of the memories 43 of the plurality of machine body controllers 40 to store (set) the current setting information ST. When the setting instruction portion 191 is touched while the display 45 is displaying the setting information ST regarding the working machine 1 for the user U1, for example, item setting information corresponding to the plurality of machine body controllers 40 is transmitted and set in the memories 43. As illustrated in FIG. 4, for example, when the raising/lowering setting item W1 is 3P position, "3P position" is set in the memory 43 of the raising/lowering controller 40D as item setting information. When the attitude setting item W2 is the position mode, "position mode" is set in the memory 43 of the attitude controller 40F as item setting information. When the traveling setting item W3 is 2WD, "2WD" is set in the memory 43 of the transmission controller 40A as item setting information.

Note that although the setting information ST regarding the working machine 1 for each user is set by touching the setting instruction portion 191, setting information ST regarding the working machine 1 corresponding a user subjected to user authentication can be automatically set in the working machine 1 in a work assist system according to the first embodiment as described later.

Next, configuration of the mobile terminal 48 will be described. The mobile terminal 48 is, for example, a mobile terminal such as a tablet, a smartphone, or a PDA. As illustrated in FIG. 1, the mobile terminal 48 includes a requester 48a, an acquirer 48b, a third communicator 48c, and a display 48d.

The requester 48a requests setting information ST regarding a working machine. The requester 48a is a CPU, electrical and electronic circuits, or the like. For example, the requester 48a causes the third communicator 48c to transmit, to the working machine 1, a first request signal for requesting the setting information ST regarding the working machine 1.

The acquirer 48b acquires information regarding a user and a language of the user. The acquirer 48b is a CPU, electrical and electronic circuits, or the like. For example, the acquirer 48b information regarding a user and a language of the user input to the mobile terminal 48 or information regarding a user and a language of the user stored in the mobile terminal 48 in advance.

The third communicator 48c is a communicator (communication module) that performs direct communication or indirect communication with the working machine 1 or the server 47, and is capable of performing wireless communication in accordance with, for example, Wi-Fi (Wireless Fidelity; registered trademark) in the IEEE 802.11 series, which is communication standards, BLE (Bluetooth (registered trademark) Low Energy), LPWA (Low Power, Wide Area), LPWAN (Low-Power Wide-Area Network), or the like. The third communicator 48c may be a communicator (communication module) that performs wireless communication over a mobile phone communication network or a data communication network.

When the third communicator 48c receives setting information ST regarding the working machine 1, the display 48d displays the received setting information ST regarding the working machine 1. For example, the display 48d displays associated data in which the setting information ST regarding the working machine 1 received by the third communicator 48c and the information regarding a user and a language of the user acquired by the acquirer 48b are associated with each other.

The third communicator 48c transmits, to the server 47 as associated data, data in which the setting information ST regarding the working machine 1 acquired as a result of the request given by the requester 48a and the information regarding the user and the language of the user acquired by the acquirer 48b are associated with each other. The server 47 stores the associated data as registration information as described later.

Here, configuration of the server 47 will be described. The server 47 is, for example, a fixed computer or the like. The server 47 may be a personal computer or the like. The server 47 includes a memory 47a, a second communicator 47b, and a controller 47c.

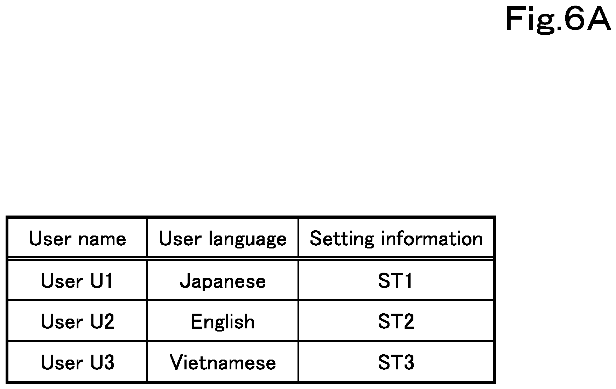

FIG. 6A is a diagram illustrating an example of registration information registered in the server 47 according to the first embodiment. As illustrated in FIG. 6A, the memory 47a of the server 47 stores in advance, as the registration information, associated data in which information regarding users, languages of the users, and setting information ST regarding the working machine 1 set by the users are associated with one another. The memory 47a stores the registration information for each user in advance. In FIG. 6A, associated data in which "user U1", which indicates information regarding a user, "Japanese", which indicates a language of the user, and "setting information ST1", which indicates setting information ST regarding the working machine 1 set by the user, are associated with one another is stored as registration information regarding the user U1. Associated data in which "user U2", which indicates information regarding a user, "English", which indicates a language of the user, and "setting information ST2", which indicates setting information ST regarding the working machine 1 set by the user, are associated with one another is stored as registration information regarding the user U2. Associated data in which "user U3", which indicates information regarding a user, "Vietnamese", which indicates a language of the user, and "setting information ST3", which indicates setting information ST regarding the working machine 1 set by the user, are associated with one another is stored as registration information regarding the user U3.

The second communicator 47b is a communicator (communication module) that performs direct communication or indirect communication with the working machine 1 or the mobile terminal 48, and is capable of performing wireless communication in accordance with, for example, Wi-Fi (Wireless Fidelity; registered trademark) in an IEEE 802.11 series, which is communication standards, BLE (Bluetooth (registered trademark) Low Energy), LPWA (Low Power, Wide Area), LPWAN (Low-Power Wide-Area Network), or the like. The second communicator 47b may be a communicator (communication module) that performs wireless communication over a mobile phone communication network or a data communication network.

The controller 47c of the server 47 identifies a language of a user and setting information ST regarding the working machine 1 corresponding to information regarding the user received from the first communicator 46 on the basis of the associated data stored in the memory 47a and causes the second communicator 47b to transmit the language and the setting information ST. The controller 47c is a device that controls the server 47 in various manners, and is a CPU, electrical and electronic circuits, or the like.

As illustrated in FIG. 1, the working machine 1 includes an authenticator 44, a biological information acquirer 49, a riding sensor 51, and a setter 55. The authenticator 44, the biological information acquirer 49, the riding sensor 51, and the setter 55 are connected to the vehicle network N1.

The riding sensor 51 is a sensor that detects that a user has ridden in the working machine 1. The riding sensor 51 is, for example, a seating sensor that detects that a user has been seated in the operator's seat, a human sensor that detects entry of a user into the cabin 9, or the like. The present embodiment will be described while assuming that the riding sensor 51 is a seating sensor.

The authenticator 44 authenticates a user who is to operate the working machine 1. The authenticator 44 includes electrical and electronic components, programs stored in the memory 54, and the like.

When a user rides in the working machine 1, the biological information acquirer 49 acquires biological information regarding the user. The biological information acquirer 49 is connected to the authenticator 44. The biological information acquirer 49 outputs the acquired biological information to the authenticator 44. The authenticator 44 authenticates the user on the basis of the biological information acquired by the biological information acquirer 49.

The biological information acquirer 49 includes at least one of an imager 49a that captures an image of a face of a user who operates the working machine 1, a voice inputter 49b to which voice of the user who operates the working machine 1 is input, and a fingerprint acquirer 49c that acquires a fingerprint of the user who operates the working machine 1. The present embodiment will be described while assuming that the biological information acquirer 49 includes the imager 49a. The imager 49a is arranged inside the cabin 9 illustrated in FIG. 15 in such a way as to include a user (at least a user's face) seated in the operator's seat 10 within an imaging area. Biological information acquired by the biological information acquirer 49, that is, a captured image acquired by the imager 49a (e.g., a face image acquired by capturing an image of the user's face), for example, is output to the authenticator 44.

The authenticator 44 performs face recognition on the user. For example, the memory 54 stores in advance registration information regarding users in which face images of the users and user names are associated with each other. The authenticator 44 determines whether the captured image from the imager 49a matches any of the images in the registration information regarding the users stored in the memory 54, and if the captured image matches any of the images, a user name corresponding to the image is identified, and the user authentication ends. If the captured image does not match any of the images in the registration information regarding the users stored in the memory 54, on the other hand, the authenticator 44 determines that no user name has been identified and there is no applicable user, and ends the user authentication.

The first communicator 46 of the working machine 1 transmits information regarding the user authenticated by the authenticator 44 to the server 47.

The setter 55 acquires a language of a user and setting information ST regarding the working machine 1 corresponding to the information regarding the user authenticated by the authenticator 44 from the memory 47a of the server 47 and sets the language and the setting information ST. More specifically, the first communicator 46 receives, from the server 47, the language of the user and the setting information ST regarding the working machine 1 corresponding to the information regarding the user authenticated by the authenticator 44. The setter 55 then sets the language of the user and the setting information ST regarding the working machine 1 received by the first communicator 46 in each of the memories 43 of the plurality of machine body controllers 40. The setter 55 includes electrical and electronic components, programs stored in the memory 54, and the like.

Even if a user other than the user authenticated by the authenticator 44 rides in the working machine 1 and the authenticator 44 authenticates the other user while the working device 2 is working, the first communicator 46 does not transmit information regarding the other user authenticated by the authenticator 44 to the server 47.

While the working device 2 is working, for example, the working device 2 is located at a working position and working on the ground and/or the machine body 3 (vehicle body) is being subjected to the automatic steering along the scheduled travel line L1 (refer to FIG. 3B). For example, the controller 50 or the raising/lowering controller 40D determines whether the working device 2 is located at a working position on the basis of a detection signal of the angle sensor 41f that detects the angle of the lift arms 8a, and if the working device 2 is located at a working position, can determine that the working device 2 is working on the ground. The controller 50 can determine whether the machine body 3 (vehicle body) is being subjected to the automatic steering along the scheduled travel line L1 on the basis of whether the automatic steering controller 40E is performing the automatic steering control.

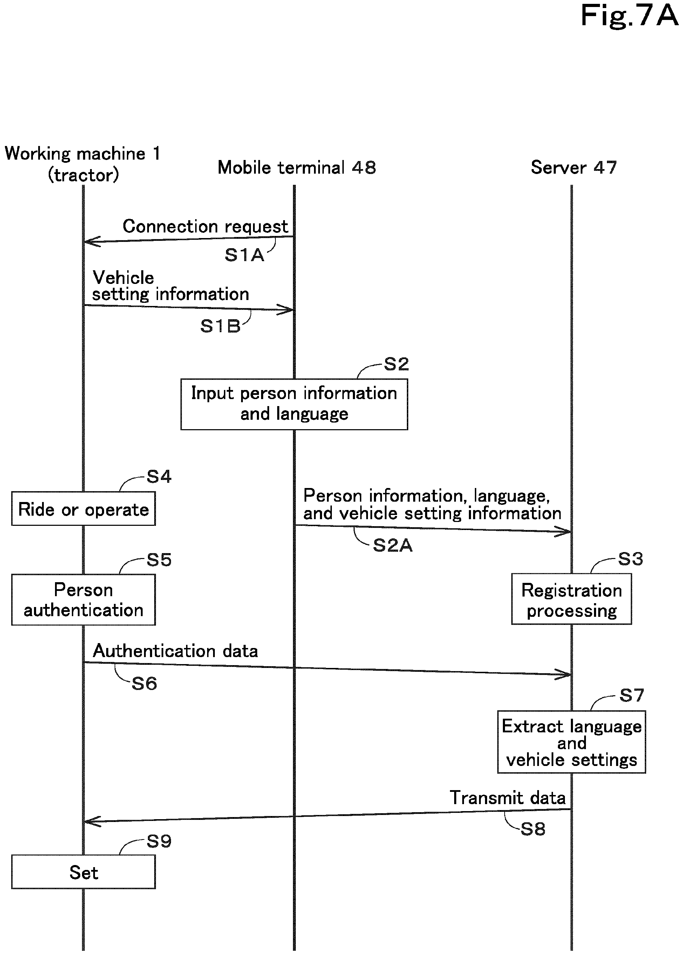

Here, a procedure of a process performed by the work assist system according to the first embodiment will be described using FIG. 7A. FIG. 7A is a diagram illustrating the procedure of the process performed by the work assist system according to the first embodiment.

The mobile terminal 48 gives a connection request to the working machine 1 (S1A). For example, the requester 48a causes the third communicator 48c to transmit, to the working machine 1, a first request signal for requesting the setting information ST regarding working machine 1.

Upon receiving the connection request from the mobile terminal 48, the working machine 1 transmits vehicle setting information (i.e., the setting information ST) to the mobile terminal 48 (S1B). For example, upon receiving the first request signal, the working machine 1 transmits, to the mobile terminal 48, vehicle setting information (the setting information ST regarding the working machine 1 including the plurality of setting items W1 to W8 illustrated in FIG. 4) currently set in the working machine 1.

Note that, when the first request signal includes information regarding a user, the working machine 1 reads setting information ST for the user from the memory 54 and transmits the setting information ST to the mobile terminal 48. More specifically, if the user U1 is specified through a touch operation performed on the mobile terminal 48, a first request signal including the user U1 as information regarding a user is transmitted. The working machine 1 identifies the setting information ST regarding the user U1 illustrated in FIG. 5 on the basis of the user U1 included in the first request signal, and then reads the setting information ST1 from the memory 54 and transmits the setting information ST1 to the mobile terminal 48.

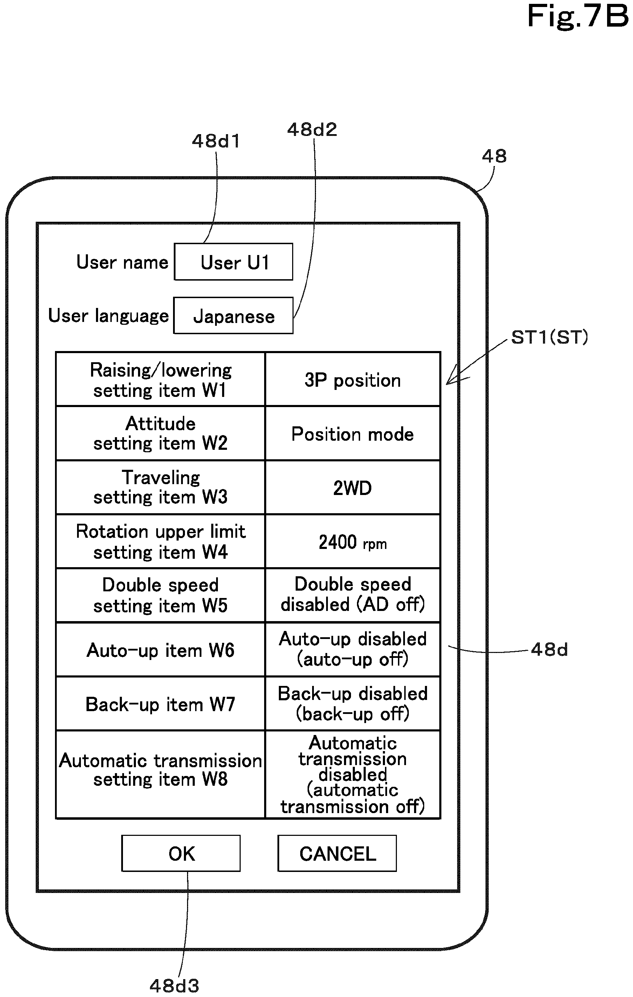

The mobile terminal 48 causes the display 48d to display the setting information ST regarding the working machine received by the third communicator 48c (S2). FIG. 7B is a diagram illustrating an example of a display screen of the mobile terminal 48. It is assumed here that the mobile terminal 48 has received the setting information ST1 regarding the working machine for the user U1. As illustrated in FIG. 7B, therefore, the display 48d of the mobile terminal 48 displays the received setting information ST1 regarding the working machine. The user who operates the mobile terminal 48 inputs information (personal information) regarding the user and a language of the user by touching input portions 48d1 and 48d2 of the display 48d, respectively. The display 48d displays the information regarding the user input in the input portion 48d1 and the language of the user input in the input portion 48d2 along with the setting information ST1 regarding the working machine.

The mobile terminal 48 transmits, to the server 47, associated data in which the information regarding the user and the language of the user acquired by the acquirer 48b from the input portions 48d1 and 48d2 and the already received setting information ST1 regarding the working machine displayed on the display 48d are associated with each other (S2A). When an "OK" button 48d3 illustrated in FIG. 7B is touched, the third communicator 48c transmits the associated data to the server 47.

Although the user inputs the information regarding the user and the language of the user in the input portions 48d1 and 48d2 of the mobile terminal 48 here, the operation to be performed is not limited to this. For example, in the case of a first request signal including the user U1 as information regarding a user, information regarding a user need not be input, and the acquirer 48b acquires the information regarding the user (here, the user U1) and automatically inputs the information in the input portion 48d1. When information regarding a language of a user is associated with the setting information ST1 regarding the user U1 illustrated in FIG. 5 and stored, a language of the user need not be input either, and the acquirer 48b acquires the language of the user and automatically inputs the language in the input portion 48d2. In this case, the mobile terminal 48 just receives the vehicle setting information, and the acquirer 48b of the mobile terminal 48 acquires the information regarding the user (user U1), the language of the user U1, and the setting information ST1 for the user U1 illustrated in FIG. 5.

Alternatively, the user of the mobile terminal 48 may input information regarding a work type and information regarding an agricultural field to the display 48d and transmit the information while associating the information with the associated data. The mobile terminal 48 may transmit, to the server 47 as information regarding an agricultural field, positional information regarding the working machine 1 received from the working machine 1 (i.e., positional information regarding the working machine 1 measured by the positioning device 41k) or positional information acquired using a GPS function of the mobile terminal 48.

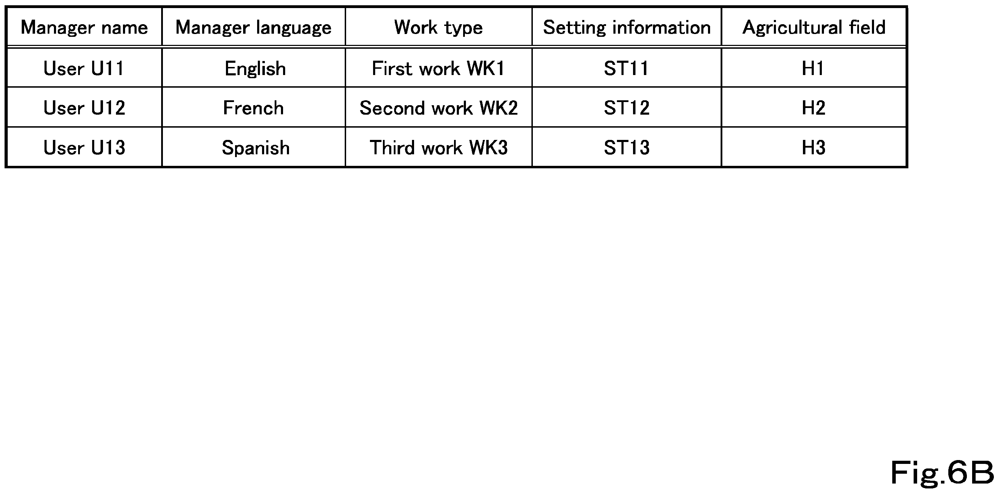

The server 47 performs registration processing, in which the associated data (i.e., the associated data in which the information regarding the user, the language of the user, and the setting information ST regarding the working machine 1 are associated with one another) transmitted from the mobile terminal 48 is stored as the registration information illustrated in FIG. 6A (S3). Note that in the case of a second embodiment that will be described later, that is, when information regarding a work type and information regarding an agricultural field are associated with the associated data, the registration information illustrated in FIG. 6B is registered to the server 47.

Next, a case where a user rides in the working machine 1 with the registration information registered in the server 47 as described above will be described hereinafter. As illustrated in FIG. 7A, when a user rides in or operates (a riding operation such as turning on of an ignition key) the working machine 1 (S4), the authenticator 44 of the working machine 1 performs user authentication (person authentication) (S5). The working machine 1 transmits authentication data regarding the user to the server 47 (S6). The server 47 extracts (identifies) a corresponding language of a user and corresponding setting information ST regarding the working machine 1 from the memory 47a on the basis of the authentication data regarding the user (S7). The server 47 transmits data of the language of the user and the setting information ST regarding the working machine 1 to the working machine 1 (S8). The working machine 1 sets the received language of the user and setting information ST regarding the working machine 1 (S9). The working machine 1 works with the setting information ST set in the memories 43 of the plurality of machine body controllers 40.

As described above, display settings (language settings of the display 45 and the like), operation settings, and vehicle settings (settings based on the setting information ST regarding the working machine 1) of the working machine 1 for each user are registered in the server 47 in advance as the registration information. User settings corresponding to the user subjected to the user authentication are then acquired from the server 47 and set in the working machine 1. Even if the user subjected to the user authentication rides in a different working machine 1 (vehicle), therefore, a vehicle operation based on the display settings (the language settings of the display 45 and the like) and the operation settings for each user can be performed, and work can be performed with the vehicle settings (the settings based on the setting information ST regarding the working machine 1) for each user can also be performed.

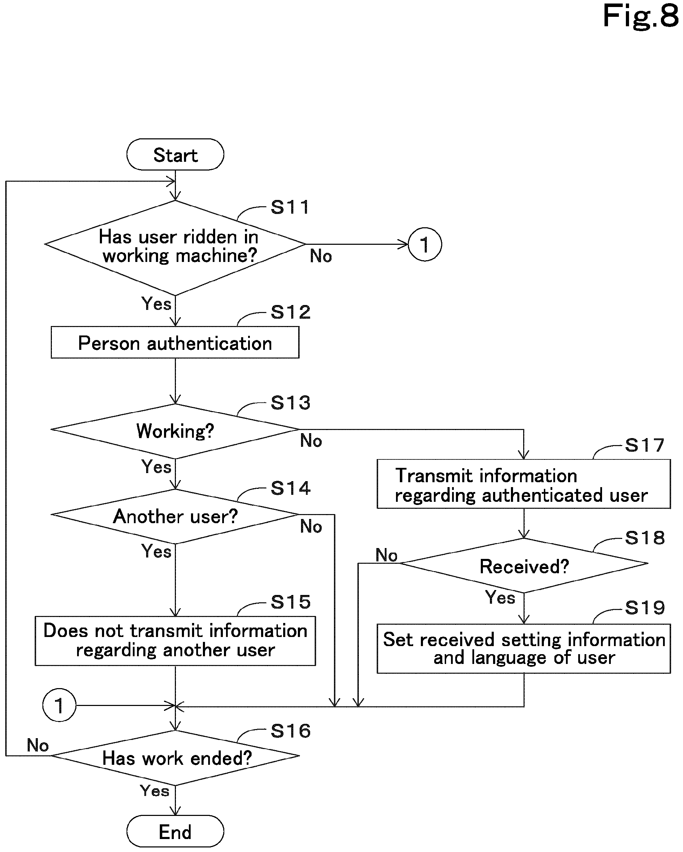

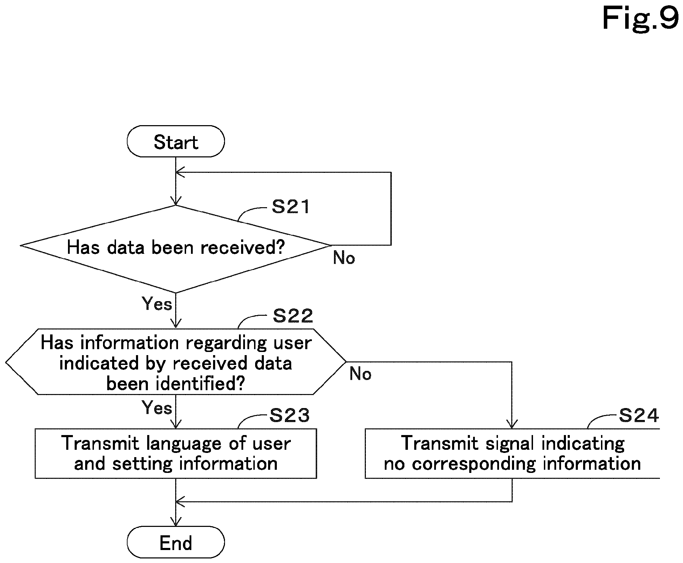

Here, processes performed by the working machine 1 and the server 47 when a user has ridden in the working machine 1 will be described using FIGS. 8 and 9. FIG. 8 is a flowchart illustrating the process performed by the working machine 1 in the work assist system according to the first embodiment. FIG. 9 is a flowchart illustrating the process performed by the server 47 in the work assist system according to the first embodiment.

As illustrated in FIG. 8, the controller 50 of the working machine 1 detects, on the basis of a detection signal of the riding sensor 51, whether a user has ridden in the working machine 1 (S11). For example, the riding sensor 51 outputs an OFF signal when a user is not seated in the operator's seat 10, and outputs an ON signal when a user is seated in the operator's seat 10. When a signal output from the riding sensor 51 changes from the OFF signal to the ON signal, the controller 50 detects that a user has ridden in the working machine 1. If the riding sensor 51 detects riding (S11, Yes), that is, the signal output from the riding sensor 51 changes from the OFF signal to the ON signal, therefore, the authenticator 44 performs user authentication (i.e., person authentication) (S12).

After S12, the controller 50 determines whether the working device 2 is working (S13). If determining that the working device 2 is not working (S13, No), the controller 50 causes the first communicator 46 to transmit information regarding the authenticated user to the server 47 (S17).

As illustrated in FIG. 9, the controller 47c of the server 47 determines whether data including information regarding the authenticated user has been received (S21). If the second communicator 47b has received the information regarding the authenticated user, for example, the controller 47c determines that data has been received (S21, Yes), and if not, the controller 47c returns to S21 and waits until data is received.

The controller 47c identifies information regarding the user indicated by the received data (S22). For example, the controller 47c determines whether the information regarding the authenticated user included in the received data is stored in the registration information (refer to FIG. 6A) in the memory 47a. If the information regarding the authenticated user indicates the user U2, for example, the information agrees with one of the user names in the registration information illustrated in FIG. 6A, and the controller 47c determines that the information regarding the user has been identified (S22, Yes) and transmits the language of the user U2 and the setting information ST2 regarding the working machine 1 for the user U2, which correspond to the user U2, to the working machine 1 (S23). That is, the second communicator 47b transmits the language of the user U2 and the setting information ST2 regarding the working machine 1 for the user U2 to the working machine 1.

If the information regarding the authenticated user is not stored in the registration information (refer to FIG. 6A) in the memory 47a in S22 (S22, No), on the other hand, the controller 47c transmits a signal indicating that there is no corresponding information to the working machine 1 (S24).

After the server 47 transmits the language of the user and the setting information ST regarding the working machine 1 for the user to the working machine 1 in S23 illustrated in FIG. 9, the working machine 1 determines, in S18 illustrated in FIG. 8, whether the language of the user and the setting information ST regarding the working machine 1 for the user have been received (S18). If the first communicator 46 has received the setting information regarding the working machine 1 and the language of the user transmitted from the server 47 (S18, Yes), the setter 55 sets the received setting information regarding the working machine 1 and language of the user in the working machine 1 (S19).

If the working machine 1 receives the signal indicating that there is no corresponding information from the server 47 in S18, on the other hand, the setter 55 determines that the language of the user and the setting information ST regarding the working machine 1 for the user have not been received (S18, No), and proceeds to S16 without making settings.

If the signal output from the riding sensor 51 has not changed from the OFF signal to the ON signal in S11 (S11, No), no user has newly ridden in the working machine 1, and the controller 50 proceeds to S16. When a previous user remains seated, the riding sensor 51 keeps outputting the ON signal. When a user has stepped out of the operator's seat 10, the signal changes from the ON signal to the OFF signal, but at this stage, no user is seated in the operator's seat 10. When no user is seated, the signal remains as the OFF signal.

If determining in S13 that the working device 2 is working (S13, Yes), on the other hand, the controller 50 determines whether the user subjected to the user authentication in S12 is another user (S14). That is, if the user subjected to the user authentication in S12 is different from the user corresponding to the current setting information ST, the controller 50 determines that the user subjected to the user authentication is another user (S14, Yes). If determining that the user subjected to the user authentication is another user (S14, Yes), the controller 50 does not transmit the information regarding the user subjected to the user authentication in S12 to the server 47 (S15).

When the original user U1 set the setting information ST1 regarding the working machine 1 and has been causing the working device 2 to work and another user U2 rides in the operator's seat 10 replacing the original user U1 while the working machine 1 is traveling at low speed, for example, user authentication is performed on the other user U2. Since the user U2 is different from the original user U1, the controller 50 determines, as a result of the user authentication, that the user subjected to the user authentication is another user (i.e., the user U2), and does not transmit information regarding the user U2 subjected to the user authentication. The working machine 1, therefore, does not receive the setting information ST2 regarding the working machine 1 for the other user U2 from the server 47. It is therefore possible to prevent the setting information ST regarding the other user U2 from being set while the working device 2 is working.

After S15, after S19, in the case of No in S14, or in the case of No in S18, the controller 50 determines whether the work has ended (S16). If the working device 2 has finished working, the controller 50 determines that the work has ended (S16, Yes), and ends the process. If the working device 2 is still working, on the other hand, the controller 50 determines that the work has not ended (S16, No), and returns to S11.

If the working device 2 is not working when the user authentication (S12) is performed (S13, No), the setting information ST regarding the working machine 1 corresponding to the user subjected to the user authentication is set in the working machine 1. If the working device 2 is working when the user authentication (S12) is performed (S13, Yes), on the other hand, it is possible to prevent the setting information ST regarding the working machine 1 corresponding to another user subjected to the user authentication from being set in the working machine 1. That is, work can be continued with the setting information ST for the original user.

The above-described work assist system according to the first embodiment is a work assist system that assists in an operation for setting the working machine 1. The work assist system includes the authenticator 44 to authenticate a user who operates the working machine 1, the memory 47a that stores in advance associated data in which information regarding a user, a language of the user, and setting information ST regarding the working machine 1 set by the user are associated with one another, and the setter 55 to acquire, from the memory 47a, the language of the user and the setting information ST regarding the working machine 1 corresponding to information regarding the user authenticated by the authenticator 44 and set the language and the setting information ST. With this configuration, when a user who operates the working machine 1 is authenticated, not only setting information ST regarding the working machine 1 corresponding to the authenticated user is set in the working machine 1 but also a language of the user is set in the working machine 1. As a result, convenience of operation of the working machine 1 can be improved.

By registering the display settings (the language setting of the display 45 and the like), the operation settings, and the vehicle settings (the settings based on the setting information ST regarding the working machine 1) of the working machine 1 for each user to the server 47 in advance, even when a user rides in another working machine 1 (vehicle), vehicle operations based on the display settings and the operation settings for each user can be performed by identifying the user through the user authentication and reading corresponding user settings from the server 47. Work can be performed with the vehicle settings (the settings based on the setting information ST regarding the working machine 1 ) for each user.

The work assist system further includes the working machine 1 and the server 47. The working machine 1 includes the authenticator 44, the first communicator 46 that transmits the information regarding the user authenticated by the authenticator 44 to the server 47, and the setter 55. The server 47 includes the memory 47a, the second communicator 47b, and the controller 47c that identifies, on a basis of the associated data, the language of the user and the setting information ST regarding the working machine 1 corresponding to the information regarding the user received from the first communicator 46 and that causes the second communicator 47b to transmit the language and the setting information ST. The setter 55 of the working machine 1 sets the language of the user and the setting information ST regarding the working machine 1 received by the first communicator 46. With this configuration, when a user who operates the working machine 1 is authenticated, the working machine 1 transmits information regarding the user to the server 47, the server 47 transmits a language of a user and setting information ST regarding the working machine 1 corresponding to the information regarding the authenticated user to the working machine 1, and the language and the setting information ST are set in the working machine 1. An operation for setting a language of a user and the working machine 1 corresponding to a user who operates the working machine 1, therefore, can be automatically performed, and the user need not perform the setting operation.

The work assist system further includes the mobile terminal 48 including the requester 48a to request the setting information ST regarding the working machine 1, the acquirer 48b to acquire the information regarding the user and the language of the user, and the third communicator 48c to transmit, as the associated data, data in which the setting information ST regarding the working machine 1 acquired as a result of the request given by the requester 48a and the information regarding the user and the language of the user acquired by the acquirer 48b are associated with one another. With this configuration, the mobile terminal 48 transmits, to the server 47 as associated data, data in which setting information ST regarding the working machine 1 acquired as a result of a request given to the working machine 1 and information regarding a user and a language of the user acquired by the acquirer 48b are associated with each other. The server 47, therefore, can store data transmitted from the mobile terminal 48 in the memory 47a as associated data. As a result, the server 47 can manage the associated data. The associated data can be sequentially stored in the memory 47a of the server 47 for each user.

The mobile terminal 48 includes the display 48d. The requester 48a causes the third communicator 48c to transmit the first request signal for requesting the setting information ST regarding the working machine 1 to the working machine 1. When the third communicator 48c receives the setting information ST regarding the working machine 1, the display 48d displays the received setting information ST regarding the working machine 1. With this configuration, since the mobile terminal 48 can request and acquire setting information ST regarding the working machine 1 and displays the acquired setting information ST regarding the working machine 1 on the display 48d, the operator who carries the mobile terminal 48 can check the setting information ST regarding the working machine 1.

The acquirer 48b acquires the information regarding the user and the language of the user input to the mobile terminal 48 or the information regarding the user or the language of the user stored in the mobile terminal 48 in advance. The display 48d displays the associated data in which the setting information ST regarding the working machine 1 received by the third communicator 48c and the information regarding the user and the language of the user acquired by the acquirer 48b are associated with one another. With this configuration, information regarding a user and a language of the user can be appropriately acquired. Since the display 48d displays associated data in which setting information ST regarding the working machine 1, information regarding a user, and a language of the user are associated with one another, the operator who carries the mobile terminal 48 can check contents of the associated data.

The working machine 1 includes the biological information acquirer 49 that acquires biological information regarding the user when the user rides in the working machine 1. The authenticator 44 authenticates the user on a basis of the biological information acquired by the biological information acquirer 49. With this configuration, since biological information regarding a user is acquired when the user rides in the working machine 1 and the user is authenticated on the basis of the biological information, the user can be promptly authenticated.

The biological information acquirer 49 includes the imager 49a that captures an image of a face of the user who operates the working machine 1, the voice inputter 49b to which a voice of the user who operates the working machine 1 is input, or the fingerprint acquirer 49c that acquires a fingerprint of the user who operates the working machine 1. With this configuration, a user can be authenticated through face recognition, voiceprint recognition, or fingerprint recognition, and the user can be reliably authenticated.

The working machine 1 includes the machine body 3 (vehicle body) including the traveling device 7 and the coupler 8A that is provided for the machine body 3 and to which the working device 2 is coupled. Even if a user other than the user authenticated by the authenticator 44 rides in the working machine 1 and the authenticator 44 authenticates the other user while the working device 2 is working, the first communicator 46 does not transmit information regarding the other user authenticated by the authenticator 44 to the server 47. With this configuration, even if a user other than an authenticated user rides in the working machine 1 and the other user is newly authenticated while the working device 2 of the working machine 1 in which a language of the authenticated user and setting information ST for the authenticated user have been set is working, information regarding the other authenticated user is not transmitted to the server 47. It is therefore possible to prevent a language of the other user and setting information ST regarding the working machine 1 for the other user from being set while the working device 2 is working. That is, while the working device 2 is working, the work can be continued while maintaining the language of the already authenticated user and the setting information ST regarding the working machine 1 for the already authenticated user, and it is possible to prevent the language of the other user who has ridden in the working machine 1 halfway through the work and the setting information ST regarding the working machine 1 for the other user from being set halfway through the work. As a result, a series of operations (i.e., work units) from a start to an end of work can be performed consistently with setting information ST for the same user. That is, user settings can be managed in work units.

While the working device 2 is working, the working device 2 is working on a ground and/or the machine body 3 (vehicle body) is being subjected to automatic steering along a scheduled travel line L1. With this configuration, it is possible to prevent a language of a user other than an authenticated user and setting information ST regarding the working machine 1 for the other user from being set when the other user rides in the working machine 1 while the working device 2 is located at a working position and working on a ground and/or the machine body 3 (vehicle body) is being subjected to automatic steering along the scheduled travel line L1. As a result, a series of operations (i.e., work units) from a start to an end of work can be performed consistently with setting information ST for the same user. That is, user settings can be managed in work units.

### [Variation]

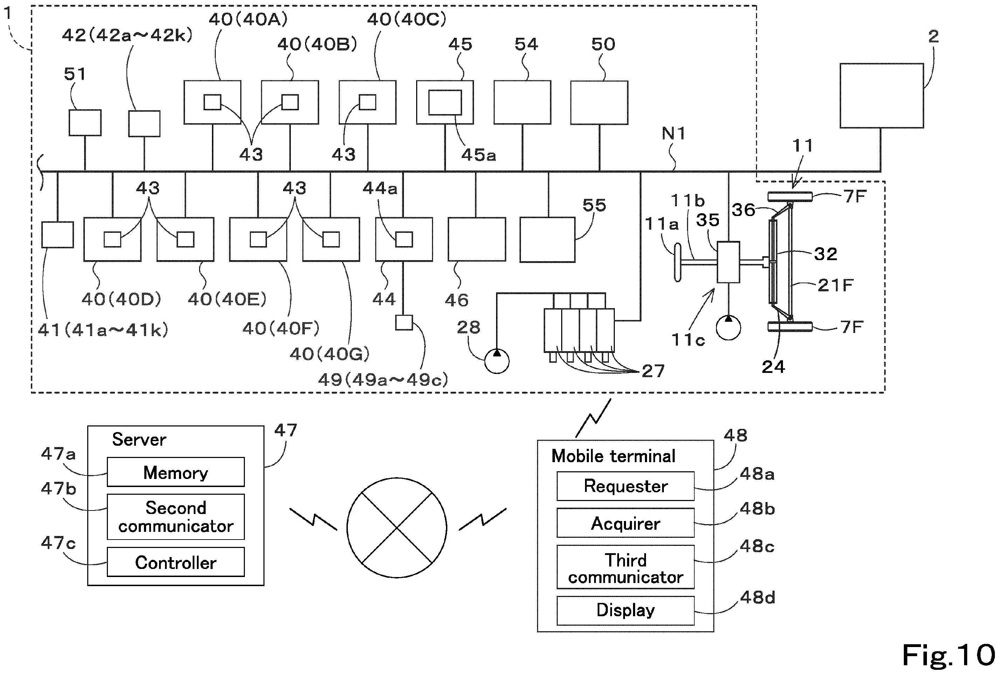

FIG. 10 is a diagram illustrating a work assist system according to a variation. The same components as in the first embodiment are given the same reference numerals, and description thereof is omitted. A working machine 1 according to the variation is different from the working machine 1 according to the first embodiment in that an information inputter 45a and a user determiner 44a are included.

As illustrated in FIG. 10, the working machine 1 according to the variation includes the information inputter 45a and the user determiner 44a. The display 45 includes the information inputter 45a to which information for theft prevention is input. The user who operates the working machine 1 inputs the information to the information inputter 45a.

The user determiner 44a determines whether the information input to the information inputter 45a matches predetermined registration information for theft prevention (e.g., a password for theft prevention). If the input information matches the registration information, the user determiner 44a determines that the user is an authorized user, and if the input information does not match the registration information, the user determiner 44a determines that the user is not an authorized user.

If the user determiner 44a determines that the user is an authorized user, the first communicator 46 transmits information regarding the user authenticated by the authenticator 44 to the server 47, and if the user determiner 44a determines that the user is not an authorized user, the first communicator 46 does not transmit information regarding the user authenticated by the authenticator 44 to the server 47.

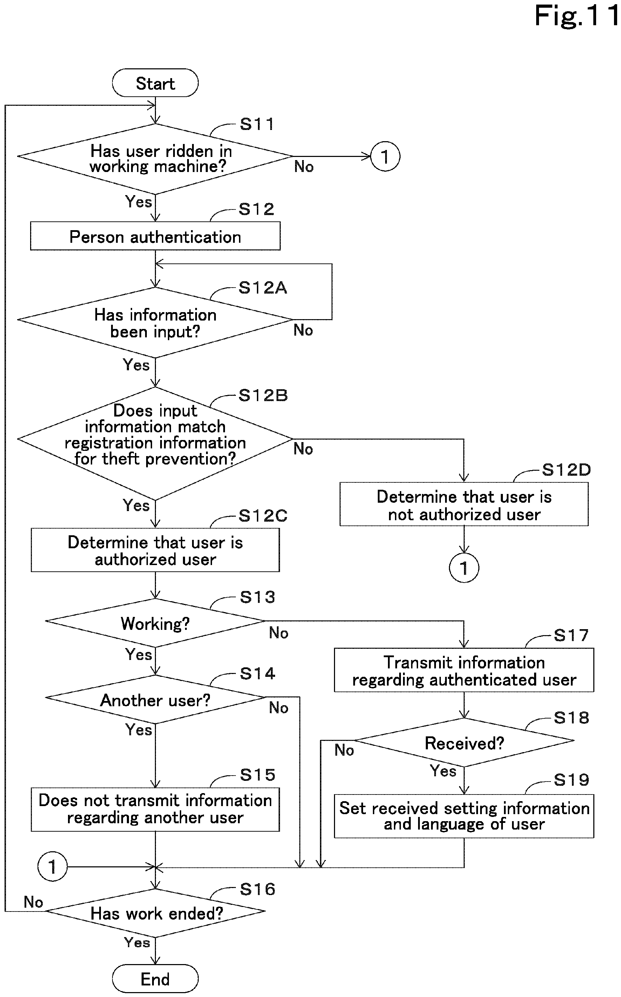

FIG. 11 is a flowchart illustrating a process performed by the working machine 1 in the work assist system according to the variation. The flowchart in the variation illustrated in FIG. 11 is different from the flowchart in the first embodiment illustrated in FIG. 8 in that S12A to S12D are added, and S12A to S12D will be described in detail.

As illustrated in FIG. 11, after the person authentication (S12), the controller 50 causes the display 45 to display the information inputter 45a and determines whether information (information for theft prevention) has been input to the information inputter 45a (S12A). The user who operates the working machine 1 inputs the information to the information inputter 45a.

If the controller 50 determines there is an input to the information inputter 45a (S12A, Yes), the user determiner 44a determines whether the information input to the information inputter 45a matches predetermined registration information for theft prevention (e.g., a password for theft prevention) (S12B). If determining that there is no input to the information inputter 45a (S12A, No), on the other hand, the controller 50 returns to S12A, and waits until there is an input.

If the input information matches the registration information (S12B, Yes), the user determiner 44a determines that the user subjected to the user authentication in S12 is an authorized user (S12C).

If the input information does not match the registration information (S12B, No), on the other hand, the user determiner 44a determines that the user subjected to the user authentication in S12 is not an authorized user (S12D).

If the controller 50 determines that the working device 2 is working (S13, Yes) and the user determiner 44a determines that the user is an authorized user (S12C), the first communicator 46 transmits information regarding the user authenticated by the authenticator 44 to the server 47 (S17).

If the controller 50 determines that the working device 2 is working (S13, Yes) and the user determiner 44a determines that the user is not an authorized user (S12D), on the other hand, the first communicator 46 proceeds to S16. The first communicator 46, therefore, does not transmit the information regarding the user authenticated by the authenticator 44 to the server 47.

In the above-described work assist system according to the variation, the working machine 1 includes the information inputter 45a to which information for theft prevention is input and the user determiner 44a that determines whether the information input to the information inputter 45a matches predetermined registration information for theft prevention and that, if the input information matches the registration information, determines that the user is an authorized user and, if the input information does not match the registration information, determines that the user is not an authorized user. If the user determiner 44a determines that the user is an authorized user, the first communicator 46 transmits information regarding the user authenticated by the authenticator 44 to the server 47, and if the user determiner 44a determines that the user is not an authorized user, the first communicator 46 does not transmit the information regarding the user authenticated by the authenticator 44 to the server 47.

With this configuration, it is possible to perform double-check in which the authenticator 44 performs user authentication on a user who has ridden in the working machine 1 and the user determiner 44a determines whether the user is an authorized user. If the user is authenticated and is an authorized user, information regarding the user authenticated by the authenticator 44 is transmitted to the server 47, and setting information ST regarding the working machine 1 and a language of the user are set. Conversely, if the user is not an authorized user, the information regarding the user authenticated by the authenticator 44 is not transmitted to the server 47, that is, even when a user who is not an authorized user rides in the working machine 1, setting information ST regarding the working machine 1 and a language of the user are not set. As a result, safety can be improved in terms of the setting of the setting information ST regarding the working machine 1 and the language of the user.

### [Second Embodiment]

A work assist system according to the second embodiment is different from that according to the first embodiment in that the working device 2 can work in agricultural fields with setting information ST regarding the working machine 1 set by managers associated with the agricultural fields and languages of the managers. Note that the same components as in the first embodiment are given the same reference numerals, and description thereof is omitted.

FIG. 6B is a diagram illustrating an example of registration information registered in a server 47 according to the second embodiment. As illustrated in FIG. 6B, a memory 47a of the server 47 according to the second embodiment stores, as associated data, agricultural field management data in which agricultural fields indicated by an agricultural field map, managers of the agricultural fields, languages of the managers, and setting information regarding the working machine 1 set by the managers are associated with one another.

More specifically, as illustrated in FIG. 6B, the memory 47a of the server 47 stores, as registration information, agricultural field management data in which information regarding agricultural fields, manager names, which are information regarding managers, languages of the managers, information regarding work types, and setting information ST regarding the working machine 1 are associated with one another. In FIG. 6B, agricultural field management data in which "user U11", which indicates information regarding a manager, "English", which indicates a language of the manager, "first work WK1", which indicates work to be performed by the working device 2, "setting information ST11", which indicates setting information ST regarding the working machine 1 set by the manager, and "agricultural field H1", which indicates an agricultural field, are associated with one another is stored as registration information regarding the user U11. Agricultural field management data in which "user U12", which indicates information regarding a manager, "French", which indicates a language of the manager, "second work WK2", which indicates work to be performed by the working device 2, "setting information ST12", which indicates setting information ST regarding the working machine 1 set by the manager, and "agricultural field H2", which indicates an agricultural field, are associated with one another is stored as registration information regarding the user U12. Agricultural field management data in which "user U13", which indicates information regarding a manager, "Spanish", which indicates a language of the manager, "third work WK3", which indicates work to be performed by the working device 2, "setting information ST13", which indicates setting information ST regarding the working machine 1 set by the manager, and "agricultural field H3", which indicates an agricultural field, are associated with one another is stored as registration information regarding the user U13.

The first communicator 46 according to the second embodiment transmits measured position information acquired by the positioning device 41k to the server 47 along with information regarding a user.

The memory 47a also stores the agricultural field map. The agricultural field map is map data at least including map information regarding agricultural fields and positional information regarding the agricultural fields. Note that the agricultural field map may be map data including map information including agricultural fields, farm roads, streets, buildings, and the like and positional information regarding these.

The controller 47c identifies an agricultural field corresponding to measured position information received by the second communicator 47b on the basis of the agricultural field management data (associated data) and identifies a manager of the identified agricultural field. If the identified manager and a user indicated by information regarding a user received by the second communicator 47b match, the controller 47c causes the second communicator 47b to transmit, to the working machine 1, a language of the identified manager and setting information regarding the working machine 1 for the identified manager. If the identified manager and a user indicated by information regarding a user received by the second communicator 47b do not match, on the other hand, the controller 47c does not cause the second communicator 47b to transmit, to the working machine 1, a language of a user and setting information regarding the working machine 1 corresponding to the received information regarding the user.

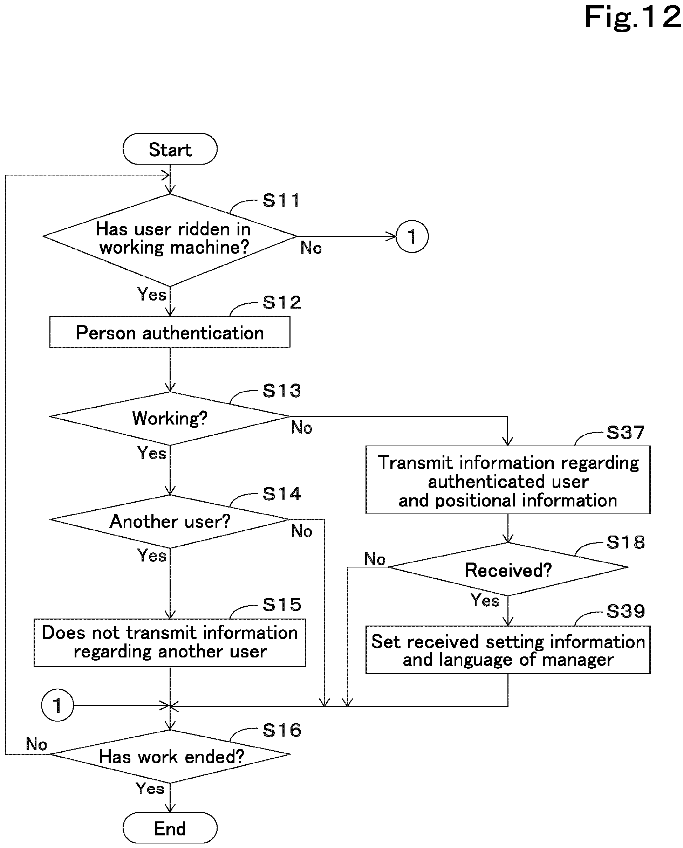

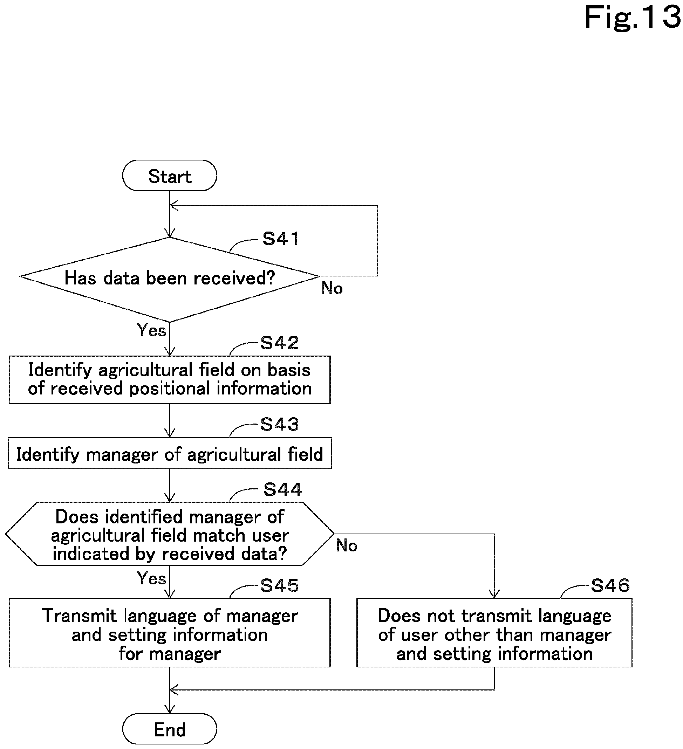

FIG. 12 is a flowchart illustrating a process performed by the working machine 1 in the work assist system according to the second embodiment. FIG. 13 is a flowchart illustrating a process performed by the server 47 in the work assist system according to the second embodiment.

Because S37 and S39 in the flowchart in the second embodiment illustrated in FIG. 12 are different from S17 and S19 in the flowchart in the first embodiment illustrated in FIG. 8, S37 and S39 will be described in detail.

If determining that the working device 2 is not working (S13, No), the controller 50 causes the first communicator 46 to transmit, to the server 47, information regarding the authenticated user and the measured position information (i.e., the positional information regarding the machine body 3) acquired by the positioning device 41k (S37).

As illustrated in FIG. 13, the controller 47c of the server 47 determines whether data including the information regarding the authenticated user has been received (S41). If the second communicator 47b has received the information regarding the authenticated user, for example, the controller 47c determines that data has been received (S41, Yes), and if not, the controller 47c returns to S41 and waits until data is received.

The controller 47c identifies an agricultural field in which the working machine 1 is located on the basis of the received measured position information (i.e., the positional information regarding the machine body 3) and the agricultural field map stored in the memory 47a in advance (S42). For example, the controller 47c identifies, using the agricultural field map, an agricultural field corresponding to a position indicated by the received positional information (latitude and longitude). It is assumed here that the agricultural field H1 has been identified as the agricultural field in which the working machine 1 is located.

The controller 47c identifies a manager of the identified agricultural field on the basis of the registration information illustrated in FIG. 6B (S43). More specifically, the controller 47c identifies the user U11 as the manager of the identified agricultural field H1 using the registration information illustrated in FIG. 6B.

The controller 47c determines whether the identified manager matches the user indicated by the information regarding a user received by the second communicator 47b (S44).

If determining that the identified manager (here, the user U11) and the user indicated by the information regarding a user received by the second communicator 47b match (S44, Yes), the controller 47c causes the second communicator 47b to transmit a language of the identified manager and setting information regarding the working machine for the identified manager to the working machine 1 (S45). If the user indicated by the received information regarding a user is the user U11, for example, the controller 47c determines that the manager (user U11) of the agricultural field H1 and the user U11 match, and causes the second communicator 47b to transmit the setting information ST11 regarding the working machine 1 for the manager (user U11) associated with the agricultural field H1 and the language ("English") of the manager (user U11) to the working machine 1.

If the identified manager (here, the user U11) and the user indicated by the information regarding a user received by the second communicator 47b do not match (S44, No), on the other hand, the controller 47c does not cause the second communicator 47b to transmit, to the working machine 1, a language of the user (i.e., a user other than the manager) corresponding to the received information regarding a user and setting information regarding the working machine 1 for the user (S46). If the user indicated by the received information regarding a user is a user (here, the user U13) other than the manager (the user U11), the controller 47c determines that the manager (user U11) of the agricultural field H1 and the user U13 do not match, and does not transmit the setting information ST13 regarding the working machine 1 for the user (here, the use U13) other than the manager (user U11) associated with the agricultural field H1 and the language ("Spanish") of the manager (user U13) to the working machine 1.

After the server 47 transmits the language of the manager and the setting information ST regarding the working machine 1 for the manager to the working machine 1 in S45 illustrated in FIG. 13, the working machine 1 determines, in S18 illustrated in FIG. 12, whether the language of the manager and the setting information ST regarding the working machine 1 for the manager have been received (S18). If the first communicator 46 receives the setting information regarding the working machine 1 for the manager and the language of the manager transmitted from the server 47 (S18, Yes), the setter 55 sets the received setting information regarding the working machine 1 for the manager and language of the manager in the working machine 1 (S39). In an agricultural field associated with a manager, therefore, setting information ST regarding the working machine 1 set by the manager and a language of the manager are set, and then the working device 2 works.

In the above-described work assist system according to the second embodiment, the memory 47a of the server 47 stores, as associated data, agricultural field management data in which agricultural fields indicated by an agricultural field map, managers of the agricultural fields, languages of the managers, and setting information regarding the working machine 1 set by the managers are associated with one another. The working machine 1 includes the machine body 3 (vehicle body) including the traveling device 7 and the positioning device 41k that acquires measured position information indicating the position of the machine body 3. The first communicator 46 transmits the measured position information to the server 47 along with information regarding a user. The controller 47c is configured or programmed to identify an agricultural field corresponding to the measured position information received by the second communicator 47b on the basis of the associated data, identify a manager of the identified agricultural field, if the identified manager and a user indicated by the information regarding a user received by the second communicator 47b match, cause the second communicator 47b to transmit the language of the identified manager and setting information regarding the working machine 1 for the identified manager to the working machine 1, and, if the identified manager and the user indicated by the information regarding a user received by the second communicator 47b do not match, not cause the second communicator 47b to transmit a language of a user and setting information regarding the working machine 1 for a user corresponding to the received information regarding a user to the working machine 1.

With this configuration, when a user who operates the working machine 1 working in an agricultural field is a manager of the agricultural field, a language of the manager and setting information regarding the working machine 1 for the manager are set in the working machine 1, and the work can be performed with the setting information for the manager associated with the agricultural field. If the user is not the manager, on the other hand, it is possible to prevent a language of a user who is not the manager and setting information regarding the working machine 1 for the user from being set in the working machine 1. That is, it is possible to prevent work from being performed with setting information for a user other than the manager associated with the agricultural field. As a result, work in an agricultural field can be managed.

### [Third Embodiment]

A work assist system according to a third embodiment is different from that according to the second embodiment in that if, while the working machine 1 is located in a second agricultural field, a user who operates the working machine 1 is a manager of the second agricultural field, setting information ST regarding the working machine 1 set by the manager of the second agricultural field and a language of the manager of the second agricultural field are set and if the user is not the manager of the second agricultural field, a warning can be issued. Note that the same components as those in the second embodiment are given the same reference numerals, and description thereof is omitted.

The first communicator 46 of the working machine 1 transmits the measured position information indicating the position of the machine body 3 to the server 47 each time a predetermined period of time (e.g., 1 minute) passes.

When the position of the vehicle body indicated by the measured position information changes from a position in a first agricultural field indicated by the agricultural field map or a position outside an agricultural field to a position in the second agricultural field, the controller 47c of the server 47 causes the second communicator 47b to transmit a second request signal for requesting information regarding a user who operates the working machine 1.

The controller 47c determines whether the information regarding a user transmitted from the working machine 1 in response to the second request signal corresponds to the manager of the second agricultural field. If the information does not correspond to the manager, the controller 47c causes the second communicator 47b to transmit a warning signal, and if the information corresponds to the manager, the controller 47c causes the second communicator 47b to transmit the language of the manager associated with the second agricultural field and the setting information regarding the working machine 1 for the manager.

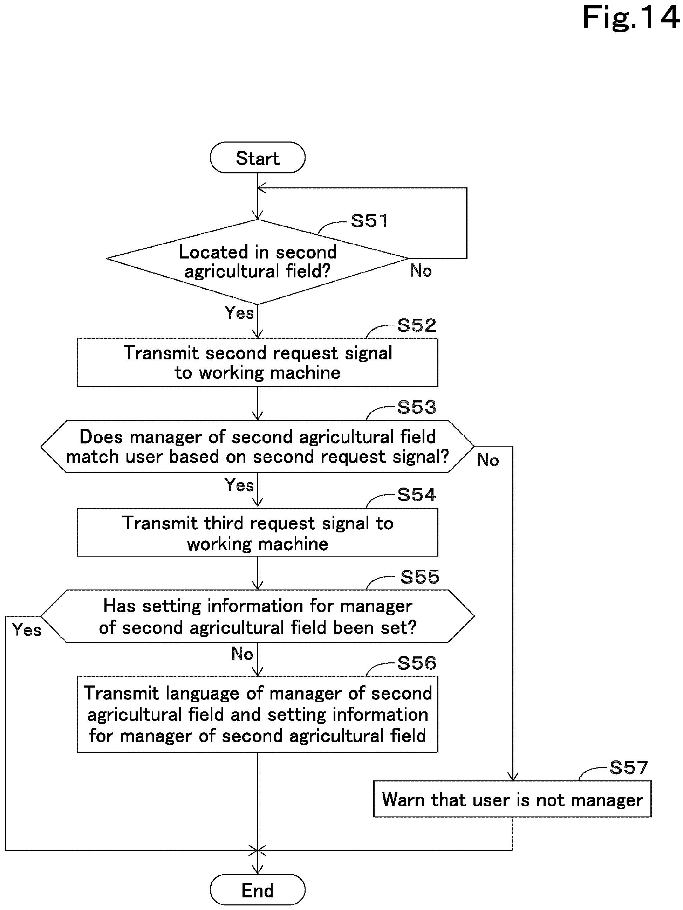

FIG. 14 is a flowchart illustrating a process performed by the server 47 in the work assist system according to the third embodiment. It is assumed in the following description that the agricultural field H1 illustrated in FIG. 6B is the first agricultural field and the agricultural field H2 is the second agricultural field. That is, a manager of the first agricultural field (agricultural field H1) is the user U11, and a language of the manager (user U11) is "English". The manager of the second agricultural field (agricultural field H2) is the user U12, and a language of the manager (user U12) is "French".

The controller 47c of the server 47 determines whether the working machine 1 is located in the second agricultural field (agricultural field H2) (S51). More specifically, the controller 47c determines whether the position of the machine body 3 (vehicle body) indicated by the measured position information received by the second communicator 47b has changed from a position in the first agricultural field (agricultural field H1) indicated by the agricultural field map stored in the memory 47a or a position outside an agricultural field to a position in the second agricultural field (agricultural field H2).

If determining that the working machine 1 is located inside the second agricultural field (agricultural field H2) (S51, Yes), the controller 47c causes the second communicator 47b to transmit the second request signal to the working machine 1 (S52). If determining that the working machine 1 is not located inside the second agricultural field (S51, No), on the other hand, the controller 47c returns to S51 and continues to determine whether the working machine 1 is located inside the second agricultural field.

After S52, the controller 47c determines whether information regarding a user transmitted from the working machine 1 in response to the second request signal corresponds to the manager (user U12) of the second agricultural field (agricultural field H2) illustrated in FIG. 6B (S53).

If a user indicated by the information regarding a user transmitted from the working machine 1 does not match the manager (user U12), the controller 47c causes the second communicator 47b to transmit a warning signal to the working machine 1 (S57). That is, when the first communicator 46 of the working machine 1 receives the warning signal, the controller 50 causes the display 45 to display a warning screen for warning that the user is not the manager. By viewing the warning screen, the user who operates the working machine 1 can understand that work in the second agricultural field is performed with the setting information ST12 regarding the working machine 1 for the manager (user U12).

If the user indicated by the information regarding a user transmitted from the working machine 1 matches the manager (user U12), on the other hand, the controller 47c causes the second communicator 47b to transmit a third request signal to the working machine 1 (S54). The third request signal is a signal for requesting transmission of current setting information ST regarding the working machine 1. When the first communicator 46 of the working machine 1 receives the third request signal, the controller 50 causes the first communicator 46 to transmit the current setting information ST regarding the working machine 1 to the server 47. The controller 47c of the server 47 determines whether the setting information ST for the manager of the second agricultural field has been set (S55). For example, the controller 47c of the server 47 determines whether the current setting information ST regarding the working machine 1 matches the language (French) of the manager (user U12) associated with the second agricultural field (agricultural field H2) and the setting information ST12 regarding the working machine 1.

If determining that the setting information ST for the manager of the second agricultural field has been set (S55, Yes), the controller 47c ends the process. If determining that the setting information ST for the manager of the second agricultural field has not been set (S55, No), on the other hand, the controller 47c causes the second communicator 47b to transmit the language (French) of the manager (user U12) associated with the second agricultural field (agricultural field H2) and the setting information ST12 regarding the working machine 1 to the working machine 1 (S56). As a result, the working device 2 works with the setting information ST12 regarding the working machine 1 set by the manager (user U12) of the second agricultural field (agricultural field H2) and the language (French) of the manager (user U12) set for the second agricultural field (agricultural field H2).

In the above-described work assist system according to the third embodiment, the first communicator 46 transmits the measured position information to the server 47 each time the predetermined period of time passes. When the position of the machine body 3 (vehicle body) indicated by the measured position information changes from a position in the first agricultural field indicated by the agricultural field map or a position outside an agricultural field to a position inside the second agricultural field, the controller 47c is configured or programmed to cause the second communicator 47b to transmit the second request signal for requesting information regarding a user who operates the working machine 1, determine whether the information regarding a user transmitted from the working machine 1 in response to the second request signal corresponds to the manager of the second agricultural field, if the information does not correspond to the manager, cause the second communicator 47b to transmit a warning signal, and if the information corresponds to the manager, cause the second communicator 47b to transmit the language of the manager associated with the second agricultural field and the setting information regarding the working machine 1 for the manager.

With this configuration, when the working machine 1 moves from a position in the first agricultural field or outside an agricultural field to a position in the second agricultural field, the authenticator 44 of the working machine 1 located in the second agricultural field authenticates a user on the basis of the second request signal from the server 47. The working machine 1 transmits information regarding the user authenticated by the authenticator 44 to the server 47. Since the server 47 transmits a warning signal to the working machine 1 if a user indicated by the information regarding a user transmitted from the working machine 1 does not match the manager of the second agricultural field, the server 47 can notify that work is to be performed in the second agricultural field with the setting information for the manager. As a result, it is possible to prevent a language of a user other than the manager and setting information regarding the working machine 1 for the user from being set in the working machine 1. That is, it is possible to prevent work from being performed with setting information for a user other than the manager associated with the second agricultural field. If the user matches the manager of the second agricultural field, on the other hand, a language of the user (= manager) who operates the working machine 1 in the second agricultural field and setting information regarding the working machine 1 for the user can be set in the working machine 1, and work can be performed with the setting information for the manager associated with the second agricultural field. As a result, work in each agricultural field can be managed.

Note that although the above-described work assist system according to each embodiment or the variation includes the working machine 1, the server 47, and the mobile terminal 48 and the mobile terminal 48 transmits associated data (information regarding a user, a language of the user, setting information ST regarding the working machine 1 for the user, etc.) to the server 47, configuration of the work assist system is not limited to this. For example, the work assist system may include the working machine 1 and the server 47 (i.e., the mobile terminal 48 is not included), and the working machine 1 may transmit associated data to the server 47. In this case, the associated data may be displayed on the display 45 of the working machine 1 and then transmitted to the server 47.

The embodiments disclosed herein are examples in all respects and should be interpreted as non-restrictive. The scope of the present invention is defined not by the above description but by the claims, and intended to include all changes within meanings and ranges equivalent to the claims.

### Reference Signs List

- 1: working machine
- 2: working device
- 3: machine body (vehicle body)
- 8A: coupler
- 44: authenticator
- 44a: user determiner
- 45: display
- 45a: information inputter
- 46: first communicator
- 47: server
- 47a: memory
- 47b: second communicator
- 47c: controller
- 48: mobile terminal
- 48a: requester
- 48b: acquirer
- 48c: third communicator
- 48d: display
- 49: biological information acquirer
- 49a: imager
- 49b: voice inputter
- 49c: fingerprint acquirer
- 50: controller
- 55: setter

## Claims

1. A work assist system that assists in an operation for setting a working machine, the work assist system comprising:
an authenticator to authenticate a user who operates the working machine;
a memory to store in advance associated data in which information regarding a user, a language of the user, and setting information regarding the working machine set by the user are associated with one another; and
a setter to acquire, from the memory, the language of the user and the setting information regarding the working machine corresponding to information regarding the user authenticated by the authenticator and set the language and the setting information.

2. The work assist system according to claim 1, further comprising:
the working machine; and
a server, wherein
the working machine includes the authenticator, a first communicator that transmits the information regarding the user authenticated by the authenticator to the server, and the setter,
the server includes the memory, a second communicator, and a controller configured or programmed to identify, on a basis of the associated data, the language of the user and the setting information regarding the working machine corresponding to the information regarding the user received from the first communicator and cause the second communicator to transmit the language and the setting information, and
the setter of the working machine sets the language of the user and the setting information regarding the working machine received by the first communicator.

3. The work assist system according to claim 2, further comprising:
a mobile terminal including:
a requester to request the setting information regarding the working machine;
an acquirer to acquire the information regarding the user and the language of the user; and
a third communicator to transmit, as the associated data, data in which the setting information regarding the working machine acquired as a result of the request given by the requester and the information regarding the user and the language of the user acquired by the acquirer are associated with one another.

4. The work assist system according to claim 3, wherein
the mobile terminal includes a display,
the requester causes the third communicator to transmit a first request signal for requesting the setting information regarding the working machine to the working machine, and
when the third communicator receives the setting information regarding the working machine, the display displays the received setting information regarding the working machine.

5. The work assist system according to claim 4, wherein
the acquirer acquires the information regarding the user and the language of the user input to the mobile terminal or the information regarding the user or the language of the user stored in the mobile terminal in advance, and
the display displays the associated data in which the setting information regarding the working machine received by the third communicator and the information regarding the user and the language of the user acquired by the acquirer are associated with one another.

6. The work assist system according to any of claims 1 to 5, wherein
the working machine includes a biological information acquirer that acquires biological information regarding the user when the user rides in the working machine, and
the authenticator authenticates the user on a basis of the biological information acquired by the biological information acquirer.

7. The work assist system according to claim 6, wherein
the biological information acquirer includes an imager that captures an image of a face of the user who operates the working machine, a voice inputter to which a voice of the user who operates the working machine is input, or a fingerprint acquirer that acquires a fingerprint of the user who operates the working machine.

8. The work assist system according to any of claims 2 to 5, wherein
the working machine includes:
an information inputter to which information for theft prevention is input; and
a user determiner that determines whether the information input to the information inputter matches predetermined registration information for theft prevention and, if the information matches the registration information, determines that the user is an authorized user and, if the information does not match the registration information, the user is not an authorized user, and
if the user determiner determines that the user is an authorized user, the first communicator transmits the information regarding the user authenticated by the authenticator to the server, and if the user determiner determines that the user is not an authorized user, the first communicator does not transmit the information regarding the user authenticated by the authenticator to the server.

9. The work assist system according to any of claims 2 to 5, wherein
the working machine includes a vehicle body including a traveling device and a coupler that is provided for the vehicle body and to which a working device is coupled, and
even if a user other than the user authenticated by the authenticator rides in the working machine and the authenticator authenticates the other user while the working device is working, the first communicator does not transmit information regarding the other user authenticated by the authenticator to the server.

10. The work assist system according to claim 9, wherein
while the working device is working, the working device is located at a working position and working on a ground and/or the vehicle body is being subjected to automatic steering along a scheduled travel line.

11. The work assist system according to any of claims 2 to 5, wherein
the memory stores, as the associated data, agricultural field management data in which an agricultural field indicated by an agricultural field map, a manager of the agricultural field, a language of the manager, and setting information regarding the working machine set by the manager are associated with one another,
the working machine includes a vehicle body including a traveling device and a positioning device that acquires measured position information indicating a position of the vehicle body and the first communicator transmits the measured position information to the server along with the information regarding the user, and
the controller is configured or programmed to:
identify an agricultural field corresponding to the measured position information received by the second communicator on a basis of the associated data;
identify a manager of the identified agricultural field;
if the identified manager and the user indicated by the information regarding the user received by the second communicator match, cause the second communicator to transmit a language of the identified manager and the setting information regarding the working machine set by the identified manager to the working machine; and
if the identified manager and the user indicated by the information regarding the user received by the second communicator do not match, not cause the second communicator to transmit a language of the user indicated by the received information regarding the user and the setting information regarding the working machine set by the user to the working machine.

12. The work assist system according to claim 11, wherein
the first communicator transmits the measured position information to the server each time a predetermined period of time passes, and
when a position of the vehicle body indicated by the measured position information changes from a position in a first agricultural field indicated by the agricultural field map or a position outside an agricultural field to a position in a second agricultural field, the controller is configured or programmed to:
cause the second communicator to transmit a second request signal for requesting the information regarding the user who operates the working machine;
determine whether the information regarding the user transmitted from the working machine in response to the second request signal corresponds to the manager of the second agricultural field;
if the information does not correspond to the manager, cause the second communicator to transmit a warning signal; and
if the information corresponds to the manager, cause the second communicator to transmit a language of the manager associated with the second agricultural field and setting information regarding the working machine set by the manager.
